# EUROPEAN PATENT SPECIFICATION

(11) **EP 4 528 916 B1**
(45) Date of publication and mention of the grant of the patent: **02.12.2026**
(21) Application number: 23840030.3
(22) Date of filing: 17.07.2023
(51) Int. Cl.: H01M 50/593, H01M 50/586, H01M 50/107, H01M 50/167, H01M 50/179, H01M 50/213, H01M 50/249, H01M 10/04

(54) **CYLINDRICAL BATTERY CELL, AND BATTERY PACK AND VEHICLE INCLUDING SAME**
ZYLINDRISCHE BATTERIEZELLE UND BATTERIEPACK UND FAHRZEUG DAMIT
ÉLÉMENT DE BATTERIE CYLINDRIQUE, ET BLOC BATTERIE ET VÉHICULE LE COMPRENANT

(30) Priority: 15.07.2022 KR 20220087508
(43) Date of publication of application: 26.03.2025
(60) Divisional application: 26207652.4
(73) Proprietor: LG Energy Solution, Ltd., Seoul 07335 (KR)
(72) Inventor: HWANG, Joong-Ha, Daejeon 34122 (KR); LEE, Jun-Oh, Daejeon 34122 (KR); LEE, Gil-Young, Daejeon 34122 (KR)
(74) Representative: Goddar, Heinz J.
(86) International application number: PCT/KR2023/010220
(87) International publication number: WO 2024/014939

(56) References cited:
- EP-A1- 4 258 462
- CN-U- 206 412 427
- CN-U- 215 342 666
- KR-A- 20100 068 080
- KR-A- 20100 068 080
- KR-A- 20110 088 494
- US-A1- 2021 280 835

## Description

### TECHNICAL FIELD

The present disclosure relates to an electrode assembly, a cylindrical battery cell and a battery pack including the same.

The present application claims priority to Korean Patent Application No. 10-2022-0087508 filed on July 15, 2022 in the Republic of Korea.

### BACKGROUND ART

Due to being easily applicable to various products and having electrical properties such as high energy density, secondary batteries are commonly applied to not only portable devices but also electric vehicles (EVs) or hybrid electric vehicles (HEVs) that are powered by a source of electric power.

Secondary batteries remarkably reduce the use of fossil fuels, and in addition to the primary advantage, they do not generate by-products from the use of energy. From this perspective, secondary batteries are seen as a new source of energy with eco-friendliness and energy efficiency.

The types of secondary batteries widely used at present include lithium ion batteries, lithium polymer batteries, nickel cadmium batteries, nickel hydrogen batteries, nickel zinc batteries or the like. A unit secondary battery cell has an operating voltage of about 2.5V to 4.5V.

Accordingly, when higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack and the electrical connection type may be variously set depending on at least one of the required output voltage or charge/discharge capacity.

Meanwhile, known types of secondary battery cells include cylindrical, prismatic and pouch-type battery cells. A cylindrical battery cell is manufactured by winding a positive electrode and a negative electrode with a separator or an insulator interposed between to form a jellyroll type electrode assembly, and inserting the electrode assembly into a battery can together with an electrolyte.

Here, when the battery can is connected to the negative electrode or the positive electrode (in general, the negative electrode) and has polarity, insulation between the battery can and the jellyroll type electrode assembly is necessary.

Meanwhile, recently, as cylindrical battery cells are applied to electric vehicles, the form factor of the cylindrical battery cells increases. That is, compared to the conventional cylindrical battery cells having 1865 and 2170 form factor, the cylindrical battery cells increase in diameter and height. The increased form factor improves energy density, safety against thermal runaway and cooling efficiency. Additionally, insulation between the battery can and the jellyroll type electrode assembly becomes more important to the cylindrical battery cells with the increased form factor.

The insulator inserted into the cylindrical battery cell for insulation is generally manufactured in a sheet shape. However, when the sheet shaped insulator is placed on the jellyroll type electrode assembly and then inserted into the battery can, the insulator may move. As a consequence, the insulator is out of the correct position, resulting in poor insulation, causing faults or failures.

Prior art relevant to the present inventive is given by KR 2010 0068080 A and EP 4 258 462 A1. It is known from the prior art a rechargeable battery comprising an electrode group including an anode, a cathode, and a separator which is placed between the anode and cathode; a case in which the electrode group is mounted; a cap assembly which is combined with the opening of the case and is electrically connected to the electrode group; an insulating member which is installed between the case and the electrode group and has a protruded elastic deformation part.

### SUMMARY

### Technical Problem

The present disclosure is designed under the above-described background, and therefore the present disclosure is directed to providing an electrode assembly in which an insulator is fixed to a battery can so as not to move, and when the jellyroll-type electrode assembly is inserted into the battery can afterward, the insulator may be coupled to the jellyroll-type electrode assembly at a correct location, thereby improving insulation and preventing faults or failures, a cylindrical battery cell and a battery pack and a vehicle including the same.

In another aspect, the present disclosure is directed to preventing damage to the jellyroll-type electrode assembly by the downward movement of the insulator at an appropriate speed with natural deformation of a protruding portion when the electrode assembly is inserted into the battery can by free fall.

The present disclosure is further directed to providing a battery pack manufactured using a cylindrical battery cell having an improved structure and a vehicle including the same.

However, the technical problem to be solved by the present disclosure is not limited to the above-described problems, and these and other problems will be clearly understood by those skilled in the art from the following description.

### Technical Solution

To solve the technical problem, a battery cell according to an aspect of the present disclosure includes an electrode assembly including a first electrode plate and a second electrode plate wound in a direction with a separator interposed between the first electrode plate and the second electrode plate; a battery can having an open portion on a side to accommodate the electrode assembly and a partially closed portion on an opposite side, and electrically connected to the second electrode plate; a current collector plate electrically connected to the first electrode plate; a cell terminal connected to the current collector plate through a through-hole of the closed portion of the battery can; and an insulator having a center hole through which a bottom of the cell terminal is exposed, and interposed between the battery can and the current collector plate.

Preferably, the insulator may have a shape corresponding to a cross-sectional shape of the jellyroll-type electrode assembly.

The insulator includes a protruding portion on an outer circumferential surface of the insulator to push an inner surface of the battery can when the electrode assembly is received in the battery can.

Preferably, the protruding portion may include a plurality of protruding portions, and the plurality of protruding portions may be arranged at a preset interval on the outer circumferential surface of the insulator.

Preferably, the protruding portions may be arranged spaced an equal distance apart along a circumferential direction on the outer circumferential surface of the insulator.

In another aspect, the insulator may have an adhesive layer on an upper surface of the insulator that contacts the battery can so that the insulator is fixed to the battery can by adhesion when the electrode assembly is received in the battery can.

Preferably, the insulator may have a through-hole in an area between the outer circumferential surface and the center hole.

In an aspect, a distance from a center of the insulator to an end of the protruding portion may be greater than a radius of the electrode assembly.

A distance from a center of the insulator to an area in which the protruding portion is not formed in the outer circumferential surface of the insulator may be equal to or greater than a radius of the electrode assembly.

In another aspect, a distance from a center of the insulator to an end of the protruding portion may be greater than an inner diameter of the battery can.

The protruding portion may be elastically compressed in an inward direction of the insulator by the inner surface of the battery can.

Preferably, the insulator may have a thickness corresponding to a distance between an inner surface of the closed portion of the battery can and the current collector plate.

The insulator may include a protrusion accommodation portion spaced apart in a direction toward a center of the insulator at a location corresponding to the protruding portion.

An outer portion of the protrusion accommodation portion has a convex shape in a direction toward the protruding portion.

The protrusion accommodation portion may have a length corresponding to a distance from an end to an opposite end of the protruding portion in a circumferential direction of the insulator.

A curvature radius of the outer portion of the protrusion accommodation portion may be smaller than a curvature radius of the protruding portion.

Preferably, the battery can may have the closed portion and the open portion opposite the closed portion, and the battery cell may further include a cap plate configured to seal the open portion of the battery can.

The cap plate may be insulated from the battery can and may not be polar.

The technical problem of the present disclosure may be also solved by a battery pack including at least one battery cell and a vehicle including at least one battery pack.

### Advantageous Effects

According to an aspect of the present disclosure, since the insulator is fixed to the battery can so as not to move, when the jellyroll-type electrode assembly is inserted into the battery can afterwards, the insulator may be coupled to the jellyroll-type electrode assembly at the correct location, thereby improving insulation and preventing faults or failures.

According to another aspect of the present disclosure, when the jellyroll-type electrode assembly is inserted into the battery can by free fall, as the protruding portion naturally deforms, the insulator may move down at the appropriate speed, thereby preventing damage to the electrode assembly. Accordingly, the present disclosure may use the manufacturing equipment designed to insert the electrode assembly by free fall in a direction from the open portion to the closed portion of the battery can, and reduce the damage risk of the electrode assembly by the use of the equipment designed to insert by free fall. As described above, less limitations on the configuration of the manufacturing equipment may make it possible to achieve simple and diverse equipment configurations with the expectation of size reduction of the equipment, simple design of the equipment and cost savings.

According to still another aspect of the present disclosure, it may be possible to provide the battery pack with improved capacity using the cylindrical battery cell having the improved structure and the vehicle including the same.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a perspective view of a cylindrical battery cell according to an embodiment of the present disclosure.
FIG. 2 is a cross-sectional perspective view of the cylindrical battery cell of FIG. 1 along centerline.
FIG. 3 is a cross-sectional view of a cylindrical battery cell according to an embodiment of the present disclosure.
FIG. 4 is a perspective view of an insulator of a cylindrical battery cell according to an embodiment of the present disclosure.
FIGS. 5 to 7 show variations of the insulator of FIG. 4.
FIG. 8 is a diagram showing a battery can of a cylindrical battery cell according to an embodiment of the present disclosure.
FIG. 9 is an enlarged view of a cell terminal of a cylindrical battery cell according to an embodiment of the present disclosure.
FIG. 10 is a cross-sectional view of another embodiment of the cylindrical battery cell of FIG. 3.
FIG. 11 is a plane view showing a structure of an electrode plate according to an embodiment of the present disclosure.
FIG. 12 is a diagram showing the definition of segment width, height and pitch according to FIG. 11.
FIG. 13 is a plane view showing a structure of an electrode plate according to another embodiment of the present disclosure.
FIG. 14 is a diagram showing the definition of segment width, height and pitch according to FIG. 13.
FIG. 15 is a cross-sectional view of an electrode assembly according to an embodiment of the present disclosure, taken along a Y axis direction (a winding axis direction).
FIG. 16 is a cross-sectional view of an electrode assembly according to another embodiment of the present disclosure, taken along a Y axis direction (a winding axis direction).
FIG. 17 is a diagram schematically showing a battery pack according to an embodiment of the present disclosure.
FIG. 18 is a diagram illustrating a vehicle including the battery pack of FIG. 17.
FIGS. 19 to 25 are diagrams showing the process steps of a method for manufacturing a cylindrical battery cell according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

In addition, to help the understanding of the present disclosure, the accompanying drawings may illustrate some elements in exaggerated dimensions, not in actual scale. Furthermore, the same element in different embodiments may be given the same reference number.

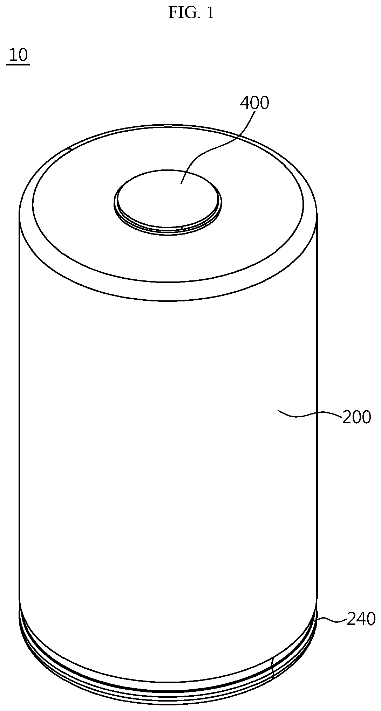

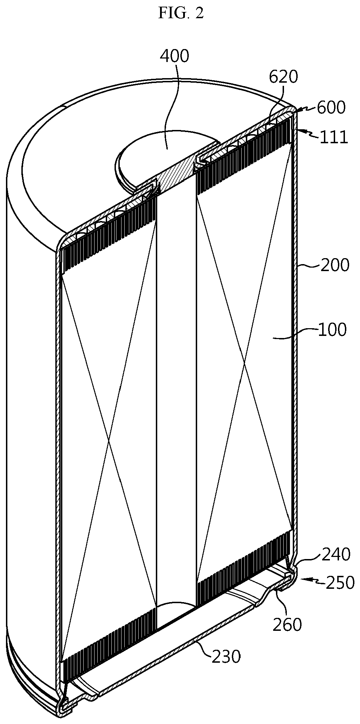

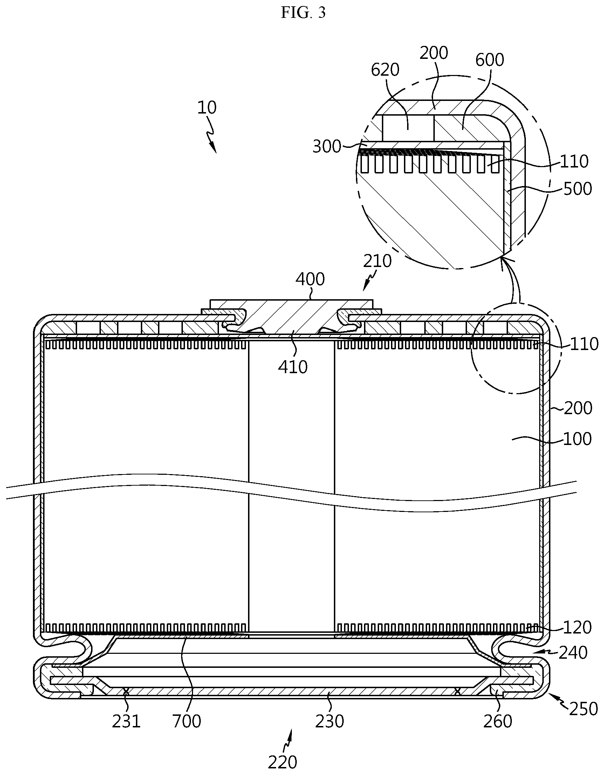

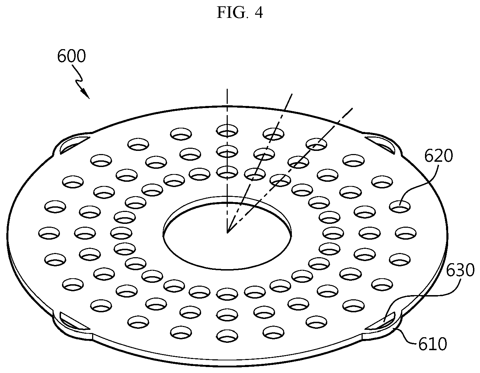

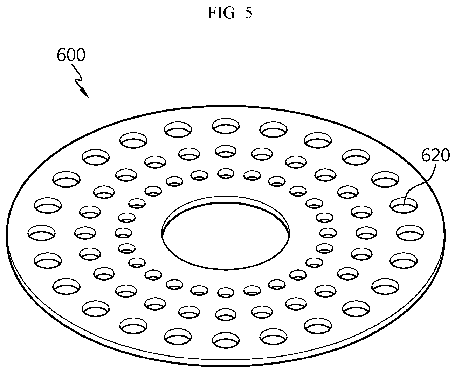

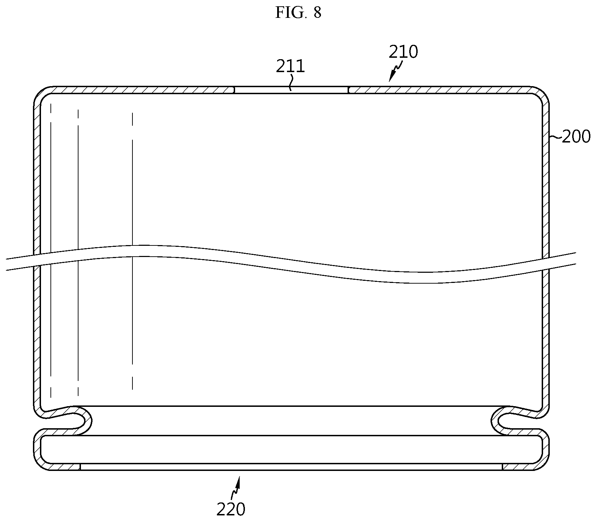

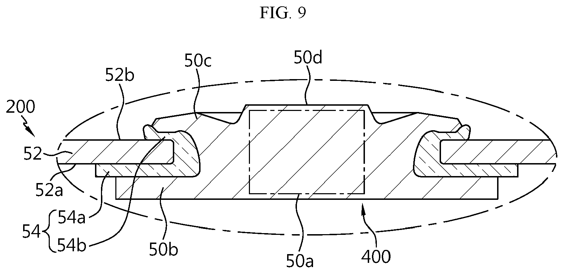

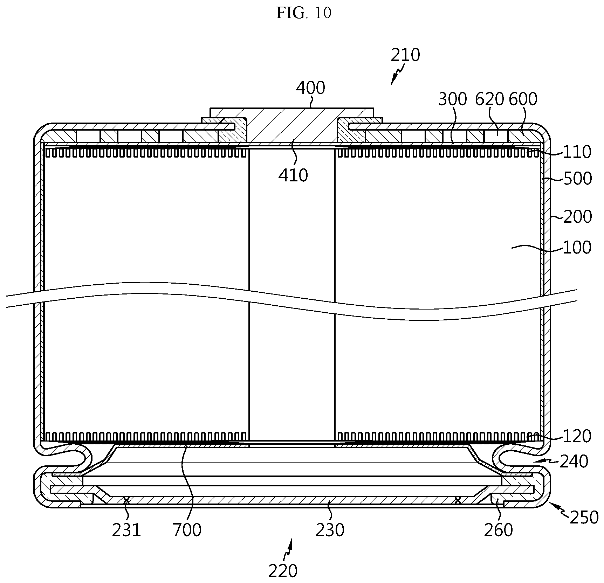

FIG. 1 is a perspective view of a cylindrical battery cell according to an embodiment of the present disclosure, FIG. 2 is a cross-sectional perspective view of the cylindrical battery cell of FIG. 1 along centerline, FIG. 3 is a cross-sectional view of the cylindrical battery cell according to an embodiment of the present disclosure, FIG. 4 is a perspective view of an insulator of the cylindrical battery cell according to an embodiment of the present disclosure, FIGS. 5 to 7 show variations of the insulator of FIG. 4, FIG. 8 is a diagram showing a battery can of the cylindrical battery cell according to an embodiment of the present disclosure, FIG. 9 is an enlarged view of a cell terminal of the cylindrical battery cell according to an embodiment of the present disclosure, and FIG. 10 is a cross-sectional view of another embodiment of the cylindrical battery cell of FIG. 3.

The cylindrical battery cell 10 according to an embodiment of the present disclosure will be described.

Preferably, the cylindrical battery cell 10 may be, for example, a cylindrical battery cell 10 having a ratio of form factor (defined as a value obtained by dividing the diameter of the cylindrical battery cell by its height, i.e., a ratio of diameter Φ to height H) large than approximately 0.4.

Here, the form factor refers to a value indicating the diameter and height of the cylindrical battery cell 10. The cylindrical battery cell 10 according to an embodiment of the present disclosure may be, for example, 46110 cell, 48750 cell, 48110 cell, 48800 cell, 46800 cell. In the numbers indicating the form factor, the former two numbers indicate the diameter of the cell, the next two numbers indicate the height of the cell, and the last number 0 indicates that the cross section of the cell is circular. When the height of the cell is larger than 100 m, a 3-didit number is necessary to indicate the height, so the last number may be omitted.

The battery cell according to an embodiment of the present disclosure may be a cylindrical battery cell 10 having an approximately cylindrical shape with the diameter of approximately 46 mm, the height of approximately 110 mm, and the ratio of form factor of 0.418.

The battery cell according to another embodiment may be a cylindrical battery cell 10 having an approximately cylindrical shape with the diameter of approximately 48 mm, the height of approximately 75 mm, and the ratio of form factor of 0.640.

The battery cell according to another embodiment may be a cylindrical battery cell 10 having an approximately cylindrical shape with the diameter of approximately 48 mm, the height of approximately 110 mm, and the ratio of form factor of 0.418.

The battery cell according to another embodiment may be a cylindrical battery cell 10 having an approximately cylindrical shape with the diameter of approximately 48 mm, the height of approximately 80 mm, and the ratio of form factor of 0.600.

The battery cell according to another embodiment may be a cylindrical battery cell 10 having an approximately cylindrical shape with the diameter of approximately 46 mm, the height of approximately 80 mm, and the ratio of form factor of 0.575.

Conventionally, battery cells having the ratio of form factor of approximately 0.4 or less have been used. That is, for example, 18650 cell, 21700 cell have been used. The 18650 cell has the diameter of approximately 18 mm, the height of approximately 65 mm, and the ratio of form factor of 0.277. The 21700 cell has the diameter of approximately 21 mm, the height of approximately 70 mm, and the ratio of form factor of 0.300.

Referring to FIGS. 2 and 3, the cylindrical battery cell 10 according to an embodiment of the present disclosure includes an electrode assembly 100, a cylindrical battery can 200, a current collector plate 300, a cell terminal 400 and an insulator 600. Here, the reference number 500 is an insulation tape 500 for insulation of the side of the electrode assembly 100 as described below, and the insulation tape 500 may prevent the contact between the current collector plate 300 and the battery can 200. The insulation tape 500 may cover at least the upper outer circumferential surface of the electrode assembly 100.

The electrode assembly 100 includes a first electrode plate, a second electrode plate and a separator interposed between the first electrode plate and the second electrode plate, wound in a direction. That is, the electrode assembly 100 is a jellyroll-type having a structure in which the first electrode plate and the second electrode plate are wound in a direction with the separator interposed between the first electrode plate and the second electrode plate. The first electrode plate and the second electrode plate may have, for example, a sheet shape. The first electrode plate may have positive or negative polarity, and the second electrode plate has the opposite polarity to the first electrode plate. That is, the first electrode plate may be a positive electrode plate or a negative electrode plate, and the second electrode plate may be a negative electrode plate or a positive electrode plate of the opposite polarity to the first electrode plate. For convenience of description, the following description is made based on the first electrode plate being the positive electrode plate and the second electrode plate being the negative electrode plate. The detailed description of the electrode assembly 100 is replaced by the above description.

The electrode assembly 100 may be various jellyroll types and modifications may be made thereto. For example, the electrode assembly 100 may have an uncoated portion that may be used as an electrode tab itself, or electrode tabs of various shapes may be connected to the uncoated portion in various manners. Hereinafter, for convenience of description, the description is made based on an embodiment in which the uncoated portion is used as an electrode tab itself, but various modifications may be made to the electrode assembly 100.

Referring to FIG. 3, the first electrode plate may include a first uncoated portion 110 without active material layer coating at the end portion on the long side. Additionally, the second electrode plate may include a second uncoated portion 120 without active material layer coating at the end portion on the long side. That is, at least one of the first electrode plate or the second electrode plate may include the uncoated portion without active material coating at the end portion on the long side along the winding direction. The uncoated portion of the first electrode plate and the uncoated portion of the second electrode plate may be located in the opposite directions. For example, the uncoated portion of the first electrode plate may extend in the upward direction of the electrode assembly 100, and the uncoated portion of the second electrode plate may extend in the downward direction of the electrode assembly 100.

Here, the first uncoated portion 110 and the second uncoated portion 120 may form a plurality of winding turns on the basis of the center of the electrode assembly 100 and be exposed to the outside of the separator for use as an electrode tab itself.

The battery can 200 may have an open portion on a side to receive the electrode assembly 100 and a partially closed portion on the opposite side. The battery can 200 may be electrically connected to the second electrode plate.

The insulator 600 may be coupled to the electrode assembly 100. The insulator 600 may have a center hole to expose the bottom of the cell terminal 400. The center hole may be formed at a location corresponding to the winding center of the electrode assembly 100. The insulator 600 may be interposed between the battery can 200 and the current collector plate 300. Preferably, for insulation, the insulator 600 is configured to cover the upper end of the first uncoated portion 110. The insulator 600 prevents the contact between the first uncoated portion 110 and the battery can 200. In FIG. 3, the current collector plate 300 is coupled to the upper side of the first uncoated portion 110, and the insulator 600 is coupled to the upper side of the current collector plate 300. That is, the insulator 600 is received in the battery can 200, covers at least part of the electrode assembly 100, and is configured to obstruct the electrical connection of the first uncoated portion 110 and the battery can 200. Here, when the current collector plate 300 is disposed on the first uncoated portion 110, the insulator 600 is coupled to the current collector plate 300 on the current collector plate 300, and obstructs the electrical connection of the battery can 200 and the current collector plate 300. Accordingly, the insulator 600 may be made of a material having insulation performance. Preferably, the insulator 600 may include an insulating polymer, but is not limited thereto. For example, the insulator 600 may be made of polyethylene terephthalate (PET), polybutylene terephthalate (PBT) or polypropylene (PP).

The insulator 600 is interposed between the battery can 200 and the current collector plate 300 to cover the upper end of the first uncoated portion 110. The insulator 600 may prevent the contact between the first uncoated portion 110 and the battery can 200 and the contact between the current collector plate 300 and the battery can 200 together with the insulation tape 500. That is, the insulator 600 may prevent the contact between the upper side of the first uncoated portion 110 and the battery can 200 or the contact between the current collector plate 300 and the battery can 200, and the insulation tape 500 may prevent the contact between the side of the electrode assembly 100 and the battery can 200. In particular, the insulation tape 500 may prevent the contact between the side of the first uncoated portion 110 and the battery can 200.

The insulator 600 may be formed in a shape corresponding to the cross-sectional shape of the jellyroll-type electrode assembly 100. For example, when the cross section of the jellyroll-type electrode assembly 100 is circular in shape, the shape of the insulator 600 may be circular in shape.

The insulator 600 may be coupled to the battery can 200 by a variety of methods. **In** an embodiment, before the electrode assembly 100 is received in the battery can 200, the insulator 600 may be coupled to the battery can 200 by interference fit. For example, referring to FIG. 4, at least one protruding portion 610 may be formed on the outer circumferential surface of the insulator 600. The protruding portion 610 may be configured to push the inner surface of the battery can 200 when the insulator 600 is received on the inner surface of the battery can 200.

Preferably, the insulator 600 may have a plurality of protruding portions 610 and the plurality of protruding portions 610 may be arranged at a preset interval on the outer circumferential surface of the insulator 600. Although FIG. 4 shows four protruding portions 610, the number of protruding portions 610 is not limited thereto. The protruding portion 610 may come in various numbers, for example, 8, 16, etc. In the case of four protruding portions 610, the four protruding portions 610 may be spaced approximately the same distance apart from each other along the circumferential direction on the outer circumferential surface of the insulator 600. When the insulator 600 having the protruding portions 610 on the outer circumferential surface is coupled to the battery can 200, as the protruding portions 610 are compressed and deform, the insulator 600 may be coupled to the inner surface of the battery can 200 by interference fit.

Preferably, the distance from the center of the insulator 600 to the end of the protruding portion 610 may be larger than the radius of the electrode assembly 100. The distance from the center of the insulator 600 to an area in which the protruding portion 610 is not formed in the outer circumferential surface of the insulator 600 may be equal to or larger than the radius of the electrode assembly 100. Accordingly, the insulator 600 may wholly cover one surface of the electrode assembly 100, thereby preventing unnecessary contact between the battery can 200 and the electrode assembly 100. Meanwhile, the distance from the center of the insulator 600 to the end of the protruding portion 610 may be larger than the inner diameter of the battery can 200. Accordingly, when the insulator 600 is inserted into the battery can 200, as the protruding portion 610 is compressed, the insulator 600 may be coupled to the battery can 200 by interference fit. For example, when the insulator 600 is inserted into the battery can 200, the protruding portion 610 may be elastically compressed in the inward direction of the insulator 600 by the inner surface of the battery can 200.

The insulator 600 has a protrusion accommodation portion 630 for natural compression of the protruding portion 610 in the inward direction of the insulator 600 when inserted into the battery can 200. The protrusion accommodation portion 630 may include a plurality of protrusion accommodation portions 630. The protrusion accommodation portion 630 may be provided in the same number as the protruding portion 610, and in this case, each of the plurality of protrusion accommodation portions 630 may be disposed at a location adjacent to each protruding portion 610. The protrusion accommodation portion 630 is an empty space formed in a portion of the insulator 600 by a slit.

With the protrusion accommodation portion 630, the insulator 600 may naturally move from the open portion to the closed portion of the battery can 200 without exertion of so much force when inserted into the battery can 200. Accordingly, when the electrode assembly 100 is inserted into the battery can 200, for example, by free fall, the insulator 600 may move down at the appropriate speed as the protruding portion naturally deforms, thereby preventing damage to the electrode assembly 100. Accordingly, the present disclosure may use the manufacturing equipment designed to insert the electrode assembly 100 by free fall in a direction from the open portion to the closed portion of the battery can, and reduce the damage risk of the electrode assembly 100 due to the use of the equipment designed to insert by free fall. As described above, less limitations on the configuration of the manufacturing equipment may make it possible to achieve simple and diverse equipment configurations with the expectation of size reduction of the equipment, simple design of the equipment and cost savings.

Additionally, in the present disclosure, when the protrusion accommodation portion 630 is applied, the protrusion accommodation portion 630 accommodates the protruding portion 610 that deforms in the inward direction of the insulator 600 when the protruding portion 610 is compressed by the inner surface of the battery can 200, thereby minimizing the force transfer to the center hole of the insulator 600. When the force by the compression of the protruding portion 610 is mitigated by the protrusion accommodation portion 630, it may be possible to prevent shape deformation of the center hole of the insulator 600 and/or size change of the center hole.

The protrusion accommodation portion 630 may be spaced apart in a direction in which the insulator 600 faces the center at a location corresponding to the protruding portion 610. An outer portion of the protrusion accommodation portion 630 may have a convex shape in a direction toward the protruding portion 610. The protrusion accommodation portion 630 may have a length corresponding to a distance from one end to the other end of the protruding portion 610 in the circumferential direction of the insulator 600. That is, the protrusion accommodation portion 630 may be configured to buffer the compression of the protruding portion 610 over the entire area in which the protruding portion 610 is formed.

The curvature radius of the outer portion of the protrusion accommodation portion 630 may be smaller than the curvature radius of the protruding portion 610. In this case, compression may easily occur at the end of the protruding portion 610, i.e., the central portion of the protruding portion 610 in the circumferential direction, thereby smoothly performing the process of inserting the insulator 600 into the battery can 200.

Meanwhile, when the insulator 600 has a through-hole 620 and a protrusion accommodation portion 610, the distance from the protruding portion 610 to the protrusion accommodation portion 610 may be shorter than the distance from the protruding portion 610 to the through-hole 620.

In another embodiment, the insulator 600 may have a hot melt layer to fix the insulator 600 to the battery can 200 by heat fusion. That is, before the electrode assembly 100 is received in the battery can 200, after the insulator 600 is inserted into the battery can 200, the insulator 600 may be fixed by hot air spray or heat fusion.

In another embodiment, the upper surface of the insulator 600 that contacts the battery can 200 may have an adhesive layer to fix the insulator 600 to the battery can 200 by adhesion. That is, before the electrode assembly 100 is received in the battery can 200, the insulator 600 may be coupled to the battery can 200 by the adhesive layer on the upper surface of the insulator 600.

In another embodiment, the insulator 600 may be fixed to the battery can 200 by a double sided tape.

As described above, when the electrode assembly 100 is inserted into the battery can 200 with the insulator 600 fixed to the battery can 200, the insulator 600 may be coupled to the correct location of the jellyroll-type electrode assembly 100, thereby improving insulation of the cylindrical battery cell and preventing faults or failures.

The insulator 600 may have a thickness of 0.8 mm or more and 1.6 mm or less. When the insulator 600 is too thin, it may result in poor insulation, and when the insulator 600 is too thick, the insulator 600 occupies a large internal space of the battery can 200, resulting in reduced capacity of the battery cell and increased cost. Accordingly, to maintain appropriate insulation and prevent the capacity reduction of the battery cell, the thickness of the insulator 600 may be 0.8 mm or more and 1.6 mm or less, and preferably 1.0 mm to 1.4 mm. However, the thickness of the insulator 600 is not limited thereto.

Referring to FIG. 4, the insulator 600 may have at least one through-hole 620 in an area between the outer circumferential surface and the center hole. The through-hole 620 may act as a movement passage of the electrolyte solution. Additionally, the through-hole 620 may prevent compression of air in the airtight space between the insulator 600 and the closed portion of the battery can 200 in the process of inserting the insulator 600 into the battery can 200 and moving from the open portion to the closed portion, thereby facilitating smooth insertion of the insulator 600. Here, when the electrolyte solution is injected into the battery can 200, the insulator 600 may be placed on bottom. That is, the electrolyte solution may be injected into the battery can 200 with the cylindrical battery cell 10 of FIG. 3 placed upside down, i.e., the cell terminal 400 at the bottom.

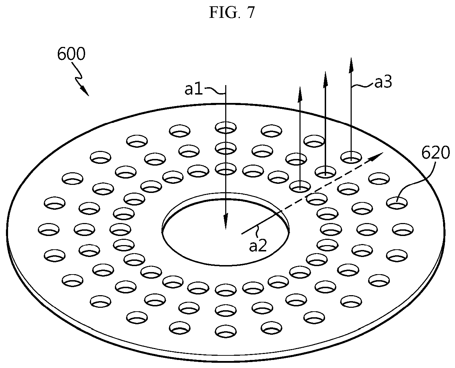

Additionally, referring to the arrow of FIG. 7, the electrolyte solution moves downward in the direction of the arrow a1 (the direction in which the electrolyte solution is injected) through the central portion of the insulator 600, then moves in the direction of the arrow a2 through the bottom of the insulator 600, and moves upward in the direction of the arrow a3 through the through-hole 620 to be supplied to the electrode assembly 100. In this instance, with the through-hole 620 of the insulator 600, it may be possible to supply the electrolyte solution to the electrode assembly 100 smoothly and easily.

The through-hole 620 may include a plurality of through-holes 620, and the plurality of through-holes 620 may be spaced a preset distance apart from each other. Referring to FIG. 4, the plurality of through-holes 620 may be arranged on any one straight line from the central portion to the outer circumferential surface of the insulator 600. Although FIGS. 4 and 7 show three through-holes 620 arranged on each of straight lines radially arranged from the central portion to the outer circumferential surface of the insulator 600, the number, shape and/or arrangement of through-holes 620 is not limited thereto.

In a variation, referring to FIG. 5, the diameter of the through-holes 620 arranged in the radial direction of the insulator 600 may be equal or different. In an example, the diameter of the through-holes 62 may be equal or increase or decrease from the center to the edge. Since the electrolyte solution moves from the center to the edge of the insulator 600, as it is closer to the center of the insulator 600, the amount of movement of the electrolyte solution in the direction of the arrow a3 may be larger. Accordingly, the amount of movement of the electrolyte solution may be adjusted to make equal by increasing the size of the through-hole 620 toward the edge of the insulator 600. In this instance, if necessary, the size of the through-holes 620 may decrease toward the edge of the insulator 600.

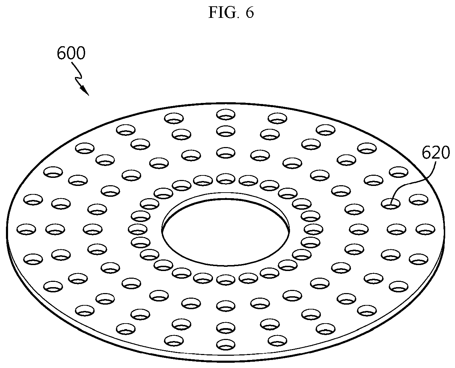

In another variation, referring to FIG. 6, the interval of the plurality of through-holes 620 in the radial direction of the insulator 600 may be equal or different. In an example, the interval of the through-holes 620 may increase or decrease from the center to the edge.

Here, the diameter of the through-hole may be 1.0 mm to 3.0 mm, and preferably, 1.2 mm to 1.7 mm.

The edge of the insulator 600 may have a complementary cross-sectional shape to the cross-sectional shape of the corner of the closed portion 210 of the battery can 200. In an example, when the cross section of the corner of the closed portion 210 of the battery can 200 is rounded, the edge of the insulator 600 may be rounded to conform to the round cross section of the corner of the closed portion 210 of the battery can 200.

Preferably, the insulator 600 may have the thickness corresponding to the distance between the inner surface of the closed portion 210 of the battery can 200 and the current collector plate 300. For example, the top of the insulator 600 may contact the inner surface of the closed portion 210 of the battery can 200, and the bottom of the insulator 600 may contact the upper surface of the current collector plate 300. Preferably, the thickness of the insulator 600 may be 0.8 mm or more and 1.6 mm or less.

The insulator 600 may include, for example, a material having elastic properties. Accordingly, when vibration or external impacts are applied to the cylindrical battery cell 10, the insulator 600 may absorb the impacts while returning to the original shape by elasticity after it has been compressed. Accordingly, it may be possible to minimize damage to the internal components of the battery cell when vibration or external impacts are applied to the battery cell.

The insulator 600 may have the center hole having a preset diameter at the central portion, and the center hole may expose the bottom of the cell terminal 400. For example, the insulator 600 may have the approximately circular center hole near the winding center. Due to the presence of the center hole, the cell terminal 400 may come into contact with the current collector plate 300 or the first uncoated portion 110. Preferably, the center hole has the diameter that is large enough to expose the bottom of the cell terminal 400.

The insulation tape 500 may be attached to the outer circumferential surface of the electrode assembly 100 up to a location at least corresponding to the edge of the insulator 600. The insulation tape 500 may be a double sided tape or a single sided tape. Additionally, the present disclosure is not limited to the insulation tape, and a heat shrink tube may be coupled to the outer circumferential surface of the electrode assembly 100.

The first electrode plate is coated with a first electrode active material on one or two surfaces. Additionally, the first uncoated portion 110 not coated with the first electrode active material is present at the end of the first electrode plate.

The second electrode plate is coated with a second electrode active material on one or two surfaces. Additionally, the second uncoated portion 120 not coated with the second electrode active material is present at the end of the second electrode plate.

Additionally, the first uncoated portion 110 of the first electrode plate and the second uncoated portion 120 of the second electrode plate face opposite directions when wound into the electrode assembly. The first uncoated portion 110 extends to the closed portion 210 of the battery can 200, and the second uncoated portion 120 extends to the open portion 220 of the battery can 200.

In the present disclosure, the positive electrode active material coated on the positive electrode plate and the negative electrode active material coated on the negative electrode plate may include, without limitation, any active material known in the corresponding technical field.

In an example, the positive electrode active material may include an alkali metal compound represented by formula A[AₓM_{y}]O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM¹O₂-(1-x)Li₂M²O₃ (M¹ includes at least one element having an average trivalent oxidation state; M² includes at least one element having an average tetravalent oxidation state; 0≤x≤1) disclosed by US6,677,082, US6,680,143.

In another example, the positive electrode active material may be lithium metal phosphate represented by formula LiₐM¹ₓFe₁₋ₓM²_{y}P_{1-y}M³_{z}O_{4-z} (M¹ includes at least one selected from Ti, Si, Mn, Co, Fe, V, Cr, Mo, Ni, Nd, Mg and Al; M² includes at least one selected from Ti, Si, Mn, Co, Fe, V, Cr, Mo, Ni, Nd, Mg, Al, As, Sb, Si, Ge, V and S; M³ includes a halogen group element optionally including F; 0 < a ≤2, 0 ≤ x ≤ 1, 0 ≤ y < 1, 0 ≤ z < 1; the stoichiometric coefficients a, x, y and z are selected to keep the compound electrically neutral), or Li₃M₂(PO₄)₃ [M includes at least one selected from Ti, Si, Mn, Fe, Co, V, Cr, Mo, Ni, Al, Mg and Al].

Preferably, the positive electrode active material may include primary particles and/or secondary particles that are agglomerates of primary particles.

In an example, the negative electrode active material may include a carbon material, lithium metal or a lithium metal compound, silicon or a silicon compound, tin or a tin compound. Metal oxide having the potential of less than 2V such as TiO₂ and SnO₂ may be used for the negative electrode active material. The carbon material may include low crystalline carbon and high crystalline carbon.

The separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, used singly or a stack of them. In another example, the separator may include a common porous nonwoven fabric, for example, a nonwoven fabric made of high melting point glass fibers and polyethylene terephthalate fibers.

The separator may include a coating layer of inorganic particles on at least one surface. Additionally, the separator itself may be a coating layer of inorganic particles. The particles that form the coating layer may be bonded to each other with a binder to create interstitial volume between adjacent particles.

The inorganic particles may include inorganics having the dielectric constant of 5 or more. Non-limiting examples of the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

An electrolyte may be a salt having a structure such as A⁺B⁻. Here, A⁺ includes an alkali metal cation such as Li⁺, Na⁺, K⁺ or a combination thereof. B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may be used by dissolving in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone or a mixture thereof.

The battery can 200 that is cylindrical in shape accommodates the electrode assembly 100 and is electrically connected to the second electrode plate of the electrode assembly 100. Accordingly, the battery can 200 may have the same polarity as the second electrode plate. That is, when the second electrode plate is negative, the battery can 200 is also negative.

When the size of the battery can 200 is set according to the standard, as the size of the electrode assembly 100 increases, the total capacity of the battery cell increases, but the gap between the battery can 200 and the electrode assembly 100 decreases.

That is, since the gap between the battery can 200 and the electrode assembly 100 decreases with the increasing size of the electrode assembly 100 to increase the total capacity of the battery cell, in order to place the insulator 600 in a smaller gap between the battery can 200 and the electrode assembly 100 for higher capacity of the battery cell, the insulator 600 is preferably as thin as possible.

Referring to FIG. 8, the battery can 200 may have the closed portion 210 and the open portion 220 opposite the closed portion 210.

For example, on the basis of FIG. 8, the battery can 200 may have the open portion 220 on bottom. The battery can 200 accommodates the electrode assembly 100 through the open portion 220 on bottom, and the electrolyte is injected through the open portion 220 on the bottom of the battery can 200. When injecting the electrolyte solution, the battery can 200 may be upside down with the open portion 220 facing upwards.

That is, the battery can 200 is an approximately cylindrical container having the open portion 220 on bottom, and for example, is made of a material having conductive properties such as a metal. The material of the battery can 200 may include a conductive metal, for example, aluminum, steel, stainless steel or the like, but is not limited thereto. Optionally, the battery can 200 may have a Ni coating layer on the surface.

Additionally, on the basis of FIG. 8, the battery can 200 may have the closed portion 210 on top. The closed portion 210 may have a through-hole 211, and the cell terminal 400 may be coupled to the through-hole 211 as shown in FIG. 3.

The battery can 200 may have a beading portion 240 and a crimping portion 250 in the lower part. The beading portion 240 is formed by inward beading of the circumference of the outer circumferential surface of the battery can 200 at an area adjacent to the open portion 220 of the battery can 200.

The beading portion 240 may support the electrode assembly 100 to prevent the electrode assembly 100 having a size approximately corresponding to the width of the battery can 200 from escaping through the open portion 220 on the bottom of the battery can 200, and may act as a support portion on which a cap plate 230 is seated. Additionally, the beading portion 240 supports the outer circumferential surface of a sealing gasket 260.

The crimping portion 250 extends and bends in the inward direction of the battery can 200 and secures the edge of the cap plate 230 together with the sealing gasket 260. Here, the crimping portion 250 is formed in the lower part of the battery can 200 based on the placement of the battery can 200. For example, as shown in FIG. 3, when the battery can 200 is placed such that the cell terminal 400 is at the top, the crimping portion 250 is formed in the lower part of the battery can 200 on the basis of FIG. 3. Additionally, as shown in FIG. 3, the crimping portion 250 is formed below the beading portion 240.

However, the present disclosure does not preclude that the battery can 200 does not have at least one of the beading portion 240 or the crimping portion 250. In the present disclosure, in the case where the battery can 200 does not have at least one of the beading portion 240 or the crimping portion 250, fixing of the electrode assembly 100 or the cap plate 230 or sealing of the battery can 200 may be realized through at least one of addition of a component that may act as a stopper for the electrode assembly 100, addition of a structure on which the cap plate 230 may be seated, or welding between the battery can 200 and the cap plate 230.

On the basis of FIG. 3, the crimping portion 250 is formed below the beading portion 240. The crimping portion 250 extends and bends around the edge of the cap plate 230 below the beading portion 240. The cap plate 230 is fixed to the beading portion 21 by the folded shape of the crimping portion 250. In this instance, the crimping portion 250 may be omitted, and the cap plate 230 may be fixed covering the open portion of the battery can 200 through any other fixing structure. For example, the Applicant's patent publication KR 10-2019-0030016 A discloses a cylindrical battery cell in which the beading portion is omitted, and this structure may be used in the present disclosure.

The current collector plate 300 is disposed on the electrode assembly 100 and electrically connected to the first electrode plate. The current collector plate 300 is made of a metal having conductive properties and is connected to the first uncoated portion 110 of the electrode assembly 100.

The current collector plate 300 may be coupled onto a coupling surface formed by bending the end of the first uncoated portion 110 in a direction parallel to the current collector plate 300. The bent direction of the first uncoated portion 110 may be, for example, a direction toward the winding center of the electrode assembly 100.

When the first uncoated portion 110 has the bent shape as described above, the space occupied by the first uncoated portion 110 reduces, resulting in improved energy density. Additionally, it is possible to increase the coupling strength and reduce the resistance due to the increased coupling area between the first uncoated portion 110 and the current collector plate 300.

The cell terminal 400 is made of a metal (for example, aluminum) having conductive properties, and is coupled to the through-hole 211 of the closed portion 210 of the battery can 200 and electrically connected to the current collector plate 300. Additionally, the cell terminal 400 is electrically connected to the first electrode plate of the electrode assembly 100 through the current collector plate 300 and thereby has a positive polarity. That is, the cell terminal 400 may act as the first electrode terminal or the positive electrode terminal. Additionally, as described above, the battery can 200 is electrically connected to the second electrode plate of the electrode assembly 100, and thereby has a negative polarity.

The cell terminal 400 may have a terminal insertion portion 410. The terminal insertion portion 410 may be inserted into the battery can 200 through the through-hole 211 of the closed portion 210 of the battery can 200 and its bottom portion may be electrically connected to the central portion of the current collector plate 300. The electrical connection may be established through welding. The welding may include laser welding, ultrasonic welding, resistance welding or the like.

The terminal insertion portion 410 may be coupled to the current collector plate 300 through both the battery can 200 and the insulator 600. As the lower edge of the terminal insertion portion 410 is pressed by a caulking jig, the cell terminal 400 may be riveted toward the upper inner surface of the battery can 200 and firmly fixed to the through-hole.

That is, the lower edge portion of the terminal insertion portion 410 may be bent toward the inner surface of the battery can 200 by the application of the caulking jig. To this end, the maximum width of the end portion of the terminal insertion portion 410 may be larger than the maximum width of the hole of the battery can 200 formed by the passing terminal insertion portion 410.

Referring to FIG. 9, the riveting structure of the cell terminal 400 may include the cylindrical battery can 200 having an open side, the cell terminal 400 riveted through the through-hole 211 on the bottom 52 of the battery can 200, and a rivet gasket 54 interposed between the cell terminal 400 and the through-hole 211.

The rivet gasket 54 may be made of a polymer resin having insulating properties and elastic properties. In an example, the rivet gasket 54 may be made of polypropylene, polybutyleneterephthalate, fluorinated polyethylene or the like, and the present disclosure is not limited thereto.

The rivet gasket 54 may include an outer gasket 54a interposed between an outer flange 50b and the outer surface 52a of the bottom 52 of the battery can 200, and an inner gasket 54b interposed between an inner flange 50c and the inner surface 52b of the battery can 200 the bottom 52. Preferably, the outer gasket 54a and the inner gasket 54b are divided on the basis of the outer surface 52a of the bottom of the battery can 200.

In another embodiment, the terminal insertion portion 410 may not have a bent shape toward the inner surface of the battery can 200. For example, referring to FIG. 10, the terminal insertion portion 410 may have an approximately cylindrical shape passing through a hole at approximately the central portion of the upper surface of the battery can 200.

In an embodiment of the present disclosure, the terminal insertion portion 410 may have a circular shape on the plane, but is not limited thereto. The terminal insertion portion 410 may selectively have a polygonal shape, a star-like shape, a shape having a leg extended from the center, etc.

The terminal insertion portion 410 of the cell terminal 400 may pass through the center hole of the insulator 600. Additionally, the diameter of the center hole of the insulator 600 may be equal to or larger than the diameter of the terminal insertion portion 410. Additionally, the terminal insertion portion 410 of the cell terminal 400 may be electrically coupled to the current collector plate 300 through the center hole of the insulator 600.

The insulator 600 is interposed between the battery can 200 and the electrode assembly 100, in FIG. 3, between the current collector plate 300 on the electrode assembly 100 and the battery can 200. The detailed description of the insulator 600 is replaced by the previous description of the insulator 600 of the electrode assembly 100 according to an embodiment of the present disclosure.

Referring to FIG. 3, the cap plate 230 is configured to seal the open portion 220 of the battery can 200. The cap plate 230 may be, for example, made of a metal to ensure stiffness.

The cap plate 230 seals the open portion 220 on the bottom of the battery can 200. The cap plate 230 may be separated from the electrode assembly 100 and may not be polar. That is, even in the case where the cap plate 230 is made of a metal having conductive properties, the cap plate 230 may not be polar. The cap plate 230 being not polar represents that the cap plate 230 is electrically insulated from the battery can 200 and the cell terminal 400. As described above, the cap plate 230 may or may not be polar, and the material is not necessarily limited to the conductive metal.

The cap plate 230 may be seated and supported on the beading portion 240 of the battery can 200. Additionally, the cap plate 230 is fixed by the crimping portion 250. The sealing gasket 260 may be interposed between of the cap plate 230 and the crimping portion 250 of the battery can 200 to ensure sealability of the battery can 200. That is, the sealing gasket 260 may be interposed between the edge of the cap plate 230 and the open portion 220 of the battery can 200.

Meanwhile, the battery can 200 of the present disclosure may not have at least one of the beading portion 240 or the crimping portion 250, and in this case, the sealing gasket 260 may be interposed between the structure for fixing at the open portion 220 of the battery can 200 and the cap plate 230 to ensure sealability of the battery can 200.

The cap plate 230 may have a vent notch 231 configured to rupture when the pressure in the battery can 200 exceeds the threshold.

For example, the vent notch 231 may be formed in two surfaces of the cap plate 230, and may be formed in at least one of a continuous circular pattern, a discontinuous circular pattern or a straight line pattern on the surface of the cap plate 230. Additionally, the vent notch 231 may be formed in a variety of other patterns.

The vent notch 231 may be disposed on bottom of the battery can 200 on the basis of the placement of the battery can 200, and configured to vent gas in the battery can 200 through the bottom of the battery can 200 when it ruptures.

For example, as shown in FIG. 3, when the battery can 200 is placed such that the cell terminal 400 is at the top, the vent notch 231 may be formed on bottom of the battery can 200 on the basis of FIG. 3.

The vent notch 231 may be an area of the cap plate 230 having a smaller thickness than the surrounding area.

Since the vent notch 231 is thinner than the surrounding area, the vent notch 231 may be more likely to rupture than the surrounding area, and when the internal pressure of the battery can 200 rises above a predetermined level, the vent notch 231 may rupture to vent gas generated in the battery can 200.

For example, the vent notch 231 may be formed on any one surface or two surfaces of the cap plate 230 through notching to reduce a portion of the thickness of the battery can 200.

The cylindrical battery cell 10 according to an embodiment of the present disclosure may have a structure in which both the positive electrode terminal and the negative electrode terminal are present at the upper part thereof, and thus the upper part structure is more complicated than the lower part structure.

Accordingly, the vent notch 231 may be present in the cap plate 230 that forms the lower surface of the cylindrical battery cell 10 to vent gas generated in the battery can 200.

As described above, when gas produced in the battery can 200 of the cylindrical battery cell 10 is vented downward, the user may be safe. For example, in the case where the cylindrical battery cell 10 is placed immediately under the driver seat in the electric vehicle, when gas is vented upward, there may be an accident risk for the driver.

However, when gas is vented in the downward direction of the battery can 200 like the cylindrical battery cell 10 according to an embodiment of the present disclosure, even though the cylindrical battery cell 10 is placed immediately under the driver seat in the electric vehicle, the above-described problem does not occur.

Referring to FIG. 3, the lower end portion of the cap plate 230 is preferably disposed higher than the lower end portion of the battery can 200. In this case, even in case that the lower end portion of the battery can 200 contacts the ground or the bottom surface of the housing for constructing a module or pack, the cap plate 230 does not contact the ground or the bottom surface of the housing for constructing a module or pack.

Accordingly, it is possible to prevent the pressure required for the rupture of the vent notch 231 from deviating from a design value due to the weight of the cylindrical battery cell 10, thereby allowing the vent notch 231 to rupture smoothly.

Referring to FIG. 3, a lower current collector plate 700 is coupled to the bottom of the electrode assembly 100. The lower current collector plate 700 is made of metal having conductive properties, such as aluminum, steel, copper, nickel, etc., and electrically connected to the second uncoated portion 120 of the second electrode plate.

Preferably, the lower current collector plate 700 is electrically connected to the battery can 200. To this end, at least part of the edge of the lower current collector plate 700 may be fixed between the inner surface of the battery can 200 and the sealing gasket 260.

In an embodiment, at least part of the edge of the lower current collector plate 700 may be fixed to the beading portion 240 by welding when it is supported on the bottom surface of the beading portion 240 on the bottom of the battery can 200. In a variation, at least part of the edge of the lower current collector plate 700 may be directly welded to the inner wall of the battery can 200.

Preferably, at least a portion of the remaining area of the lower current collector plate 700 excluding the coupled part with the beading portion may be coupled to the bent surface of the second uncoated portion 120 through welding, for example, laser welding.

Preferably, at least part of the edge of the lower current collector plate 700 may be electrically coupled to the surface of the beading portion 240 adj acent to the crimping portion 250 among the upper surface and the lower surface of the beading portion 240.

Meanwhile, the electrode assembly 100 according to an embodiment of the present disclosure may include the first electrode plate and the second electrode plate, the first electrode plate may include the first uncoated portion 110, and the second electrode plate may include the second uncoated portion 120. Additionally, at least part of the first uncoated portion 110 and/or the second uncoated portion 120 may be divided into a plurality of segments, and the structure of the segments will be described in detail below.

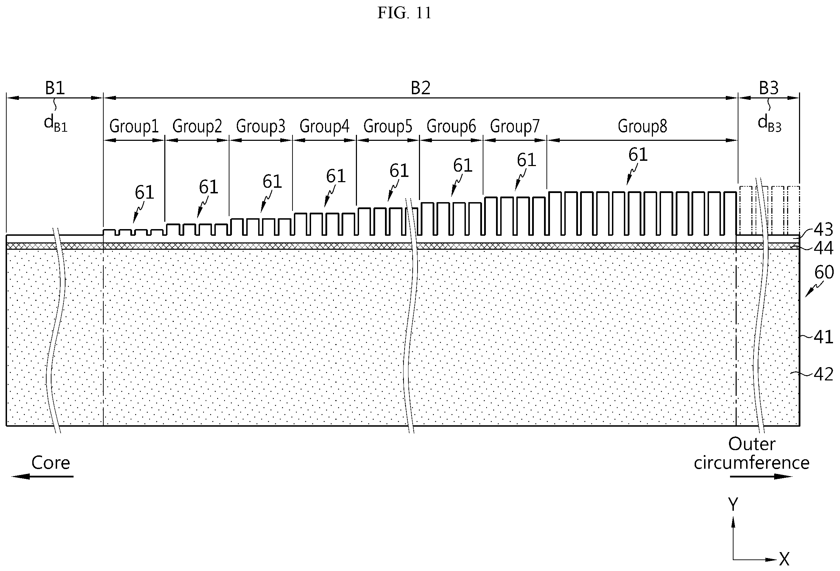

FIG. 11 is a plane view showing the structure of the electrode plate according to an embodiment of the present disclosure.

Referring to FIG. 11, in the uncoated portion 43 of the electrode plate 60, a core-side uncoated portion B1 and an outer circumference-side uncoated portion B3 is equal to or larger than 0 in height, and shorter than an intermediate uncoated portion B2. Additionally, the height of the core-side uncoated portion B1 and the height of the outer circumference-side uncoated portion B3 may be equal or different.

Preferably, at least part of the intermediate uncoated portion B2 may include a plurality of segments 61. The height of the segments 61 may increase stepwise from the core to the outer circumference.

The segments 61 may be formed by laser notching. The segments 61 may be formed by the known metal foil cutting process such as ultrasonic cutting or punching.

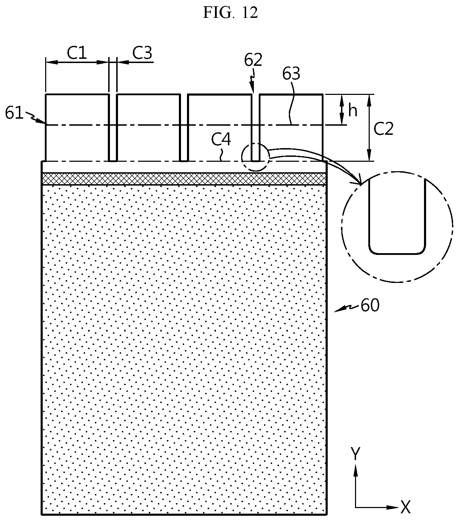

In FIG. 11, a predetermined gap is preferably present between the lower end of a cutting line (C4 in FIG. 12) between the segments 61 and the active material layer 42 to prevent damage to the active material layer 42 and/or insulation the coating layer 44 during the bending of the uncoated portion 43. It is because, stress concentrates on the lower end of the cutting line when the uncoated portion 43 bends. The gap is preferably 0.2 to 4 mm. When the gap is adjusted to the corresponding numerical range, it may be possible to prevent damage the active material layer 42 and/or the insulation coating layer 44 near the lower end of the cutting line by stress during the bending of the uncoated portion 43. Additionally, the gap may prevent damage to the active material layer 42 and/or the insulation coating layer 44 caused by the tolerance in notching or cutting of the segments 61. Preferably, when the electrode plate 60 is wound, at least part of the insulation coating layer 44 may be exposed to the outside of the separator. In this case, the insulation coating layer 44 may support the bending point when the segments 61 bend.

The plurality of segments 61 may form a plurality of segment groups from the core to the outer circumference. At least one of width, height or pitch of the segments in the same segment group may be substantially equal.

FIG. 12 is a diagram showing the definition of the width, height and pitch of the segments 61 according to an embodiment of the present disclosure. Referring to FIG. 12, the width C1, height C2 and pitch C3 of the segments 61 are designed to prevent tearing in the uncoated portion 43 during the bending of the uncoated portion 43, increase the number of overlapping layers of the uncoated portion 43 enough to improve the weld strength and prevent abnormal deformation of the uncoated portion 43. The abnormal deformation refers to irregular deformation caused by the collapse of the uncoated portion below the bending point due to the failure to keep the uncoated portion in a linear state.

Preferably, the width C1 of the segments 61 may be adjusted in a range between 1 and 8 mm. When C1 is less than 1 mm, a sufficient area in which the segments 61 do not overlap or empty space (a gap) to ensure the weld strength is created when the segments 61 bend toward the core. In contrast, when C1 is larger than 8 mm, the uncoated portion 43 near the location at which the segments 61 bend may be torn by stress.

Additionally, the height of the segments 61 may be adjusted in a range between 2 and 10 mm. When C2 is less than 2 mm, a sufficient area in which the segments 61 do not overlap or an empty space (a gap) to ensure the weld strength is created when the segments 61 bend toward the core. In contrast, when C2 is larger than 10 mm, it is difficult to manufacture the electrode plate while uniformly maintaining the flatness of the uncoated portion in the winding direction X. That is, swelling occurs due to the high height of the uncoated portion. Additionally, the pitch C3 of the segments 61 may be adjusted in a range between 0.05 and 1 mm. When C3 is less than 0.05 mm, the uncoated portion 43 near the bending point may be torn by stress when the segments 61 bend. In contrast, when C3 is larger than 1 mm, a sufficient area in which the segments 61 do not overlap or empty space (gap) to ensure the weld strength may be created when the segments 61 bend.

Referring to FIG. 12, a cutout portion 62 is interposed between two adjacent segments 61 in the winding direction X. The cutout portion 62 corresponds to a space formed by removing the uncoated portion 43. Preferably, the lower corner of the cutout portion 62 may have a round shape (see the partial enlarged diagram). The round shape may mitigate the stress applied to the lower end of the cutout portion 62 during winding of the electrode plate 60 and/or bending of the segments 61.

Referring back to FIG. 11, the width d_{B1} of the core-side uncoated portion B1 is designed on the condition that the cavity at the core of the electrode assembly is not covered when the segments 61 of the intermediate uncoated portion B2 bend toward the core.

In an example, the width d_{B1} of the core-side uncoated portion B1 may increase in proportion to the bend length of the segments 61 in group 1. The bend length corresponds to the height of the segments 61 on the basis of bending point (63 in FIG. 12). Referring to FIG. 12, C4 indicates the lowest point of the bendable location. The bending point may be appropriately set to the location indicated by C4 or above C4. The bend length is the length from the bending point the top of the segments 61. Specifically, the bending point may be set to a predetermined point of the height C2 of the segments 61 on the basis of C4. The predetermined point may be set to prevent physical damage to the active material layer 42 or the insulation coating layer 44 due to stress occurring when the segments 61 bend, form a sufficient number of overlapping layers in the radial direct when the segments 61 bend in a direction opposite the electrode assembly and ensure a sufficient weld strength when the current collector plate is welded to the area in which the segments 61 are bent.

In a specific example, when the electrode plate 60 is used to manufacture the electrode assembly of the cylindrical cell with 46800 form factor, the width d_{B1} of the core-side uncoated portion B1 may be set to 180 to 350 mm according to the diameter of the electrode assembly the core.

In an embodiment, the width of each segment group may be designed to form the same winding turn of the electrode assembly.

Here, the winding turn may be counted on the basis of the end of the core-side uncoated portion B1 when the electrode plate 60 is wound.

In another variation, the width of each segment group may be designed to form at least one winding turn of the electrode assembly.

In another variation, the width and/or height and/or pitch of the segments 61 in the same segment group may gradually and/or stepwise and/or irregularly increase or decrease in the group.

Groups 1 to 8 are an example of the segment group. The number of groups, the number of segments 61 in each group and the width of the group may be preferably adjusted so that the segments 61 overlap in multilayers to maximize stress dissipation during the bending of the uncoated portion 43 and ensure a sufficient weld strength.

In another variation, the height of the outer circumference-side uncoated portion B3 may decrease gradually or stepwise.

In another variation, the segment structure of the intermediate uncoated portion B2 may be extended to the outer circumference-side uncoated portion B3 (see the dashed line). In this case, in the same way as the intermediate uncoated portion B2, the outer circumference-side uncoated portion B3 may include a plurality of segments. In this case, the segments of the outer circumference-side uncoated portion B3 may be larger in width and/or height and/or pitch than the intermediate uncoated portion B2. Optionally, the segment structure of the outer circumference-side uncoated portion B3 may be substantially identical to the outermost segment group of the intermediate uncoated portion B2.

In a specific embodiment, when the electrode plate 60 is used to manufacture the electrode assembly of the cylindrical cell with 46800 form factor, the width d_{B1} of the core-side uncoated portion B1 may be 180 to 350 mm. The width of group 1 may be 35 to 40% compared to the width of the core-side uncoated portion B1. The width of group 2 may be 130 to 150% compared to the width of group 1. The width of group 3 may be 120 to 135% compared to the width of group 2. The width of group 4 may be 85 to 90% compared to the width of group 3. The width of group 5 may be 120 to 130% compared to the width of group 4. The width of group 6 may be 100 to 120% compared to the width of group 5. The width of group 7 may be 90 to 120% compared to the width of group 6. The width of group 8 may be 115~130% compared to the width of group 7. The width d_{B3} of the outer circumference-side uncoated portion B3 may be 180 to 350 mm in the same way as the width of the core-side uncoated portion B1.

The width of groups 1 to 8 does not show a uniformly increasing or decreasing pattern because the width of the segments gradually increases from group 1 to group 8, but the number of segments in the group is limited to an integer number. Accordingly, the number of segments in the specific segment group may decrease. Accordingly, the width of the group may have an irregular change as shown above from the core to the outer circumference.

That is, when the width in the winding direction for each of three adjacent consecutive segment groups in the circumferential direction of the electrode assembly is W1, W2 and W3, there may be a segment group(s) where W3/W2 is smaller than W2/W1.

In the above-described specific example, groups 4 to 6 are the case. A width ratio of group 5 to group 4 is 120 to 130%, a width ratio of group 6 to group 5 is 100 to 120%, and the value is smaller than 120 to 130%.

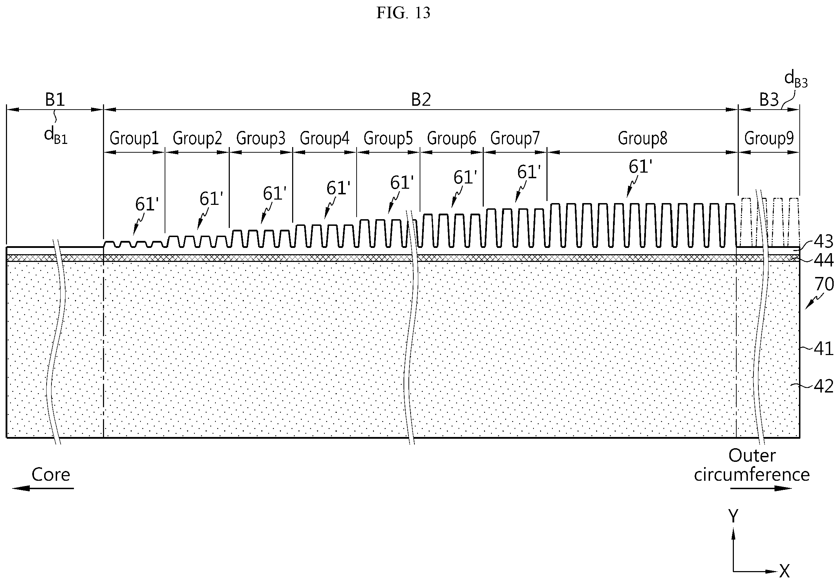

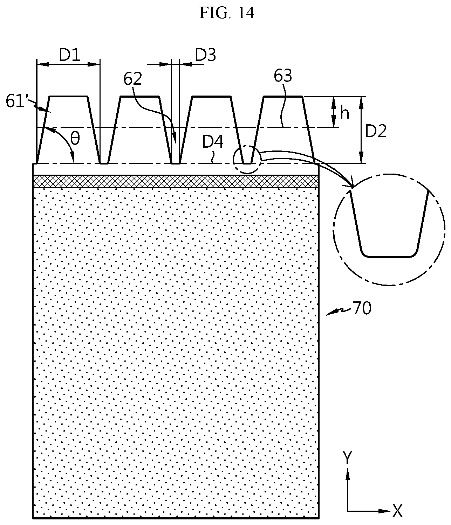

FIG. 13 is a plane view showing the structure of the electrode plate according to another embodiment of the present disclosure, and FIG. 14 is a diagram showing the definition of segment width, height and pitch according to FIG. 13.

Referring to FIG. 13, the electrode plate 70 is substantially the same as FIG. 11 except that the shape of the segments 61' is changed from rectangular to trapezoidal.

FIG. 14 shows the definition of width, height and pitch of the trapezoidal segments 61'.

Referring to FIG. 14, the width D1, the height D2 and the pitch D3 of the segments 61' are designed to prevent tearing in the uncoated portion 43 near the bending point during the bending of the uncoated portion 43, increase the number of overlapping layers of the uncoated portion 43 to ensure a sufficient weld strength and prevent abnormal deformation of the uncoated portion 43.

Preferably, the width D1 of the segments 61' may be adjusted in a range between 1 and 8 mm. When D1 is less than 1 mm, a sufficient area in which the segments 61' do not overlap or empty space (gap) to ensure the weld strength may be created when the segments 61' bend toward the core. In contrast, when D1 is larger than 8 mm, the uncoated portion 43 near the bending point may be torn by stress when the segments 61 bend. Additionally, the height of the segments 61' may be adjusted in a range between 2 and 10 mm. When D2 is less than 2 mm, a sufficient area in which the segments 61' do not overlap or empty space (gap) to ensure the weld strength may be created when the segments 61' bend toward the core. In contrast, when D2 is larger than 10 mm, it is difficult to manufacture the electrode plate while uniformly maintaining the flatness of the uncoated portion 43 in the winding direction. Additionally, the pitch D3 of the segments 61' may be adjusted in a range between 0.05 and 1 mm. When D3 is less than 0.05 mm, the uncoated portion 43 near the bending point D4 may be torn by stress when the segments 61' bend. In contrast, when D3 is larger than 1 mm, a sufficient area in which the segments 61' do not overlap or empty space (gap) to ensure the weld strength may be created when the segments 61' bend.

The cutout portion 62 is interposed between two adjacent segments 61' in the winding direction X. The cutout portion 62 corresponds to a space formed by removing the uncoated portion 43. Preferably, the lower corner of the cutout portion 62 may have a round shape (see the partial enlarged diagram). The round shape may mitigate stress when the segments 61' bend.

Referring to FIGS. 13 and 14, the segments 61' may have an increasing bottom interior angle θ of the trapezoid from the core to the outer circumference. When the radius of the electrode assembly 70 increases, the curvature increases. When the bottom interior angle θ of the segments 61' increases with the increasing radius of the electrode assembly, it may be possible to mitigate stress in the radial direction and the circumferential direction occurring when the segments 61' bend. Additionally, as the bottom interior angle θ increases, when the segments 61' bend, the overlapping area with the inner segments 61' and the number of overlapping layers increases, so it may be possible to ensure the uniform weld strength in the radial direction and the circumferential direction and make the bent surface flat.

In an example, in the case where the electrode plate 70 is used to manufacture the electrode assembly of the cylindrical cell with 46800 form factor, when the diameter of the core (cavity) is 4 mm and the radius of the electrode assembly 70 increases from 4 mm to 22 mm, the interior angle of the segments 61' may increase stepwise in a range between 60° and 85°.

In a variation, in the same way as the first and second embodiments, the height of the outer circumference-side uncoated portion B3 may decrease gradually or stepwise. Additionally, the segment structure of the intermediate uncoated portion B2 may be extended to the outer circumference-side uncoated portion B3 (see the dashed line). In this case, in the same way as the intermediate uncoated portion B2, the outer circumference-side uncoated portion B3 may include a plurality of segments. In this case, the segments of the outer circumference-side uncoated portion B3 may be larger in width and/or height and/or pitch than the intermediate uncoated portion B2. Optionally, the segment structure of the outer circumference-side uncoated portion B3 may be substantially identical to the outermost segment group of the intermediate uncoated portion B2.

In a specific embodiment, when the electrode plate 70 is used to manufacture the electrode assembly of the cylindrical cell with 46800 form factor, the width d_{B1} of the core-side uncoated portion B1 may be 180 to 350 mm. The width of group1 may be 35 to 40% compared to the width of the core-side uncoated portion B1. The width of group 2 may be 130 to 150% compared to the width of group 1. The width of group 3 may be 120 to 135% compared to the width of group 2. The width of group 4 may be 85 to 90% compared to the width of group 3. The width of group 5 may be 120 to 130% compared to the width of group 4. The width of group 6 may be 100 to 120% compared to the width of group 5. The width of group 7 may be 90 to 120% compared to the width of group 6. The width of group 8 may be 115 to 130% compared to the width of group 7. The width d_{B3} of the outer circumference-side uncoated portion B3 may be 180 to 350 mm in the same way as the width of the core-side uncoated portion B1.

The width of groups 1 to 8 does not show a uniformly increasing or decreasing pattern because the width of the segments gradually increases from group 1 to group 8, but the number of segments in the group is limited to an integer number. Accordingly, the number of segments in the specific segment group may decrease. Accordingly, the width of the group may have an irregular change as shown above from the core to the outer circumference.

That is, when the width in the winding direction for each of three adjacent consecutive segment groups in the circumferential direction of the electrode assembly is W1, W2 and W3, there may be a segment group(s) where W3/W2 is smaller than W2/W1..

In the above-described specific example, groups 4 to 6 are the case. A width ratio of group 5 to group 4 is 120 to 130%, a width ratio of group 6 to group 5 is 100 to 120%, and the value is smaller than 120 to 130%.

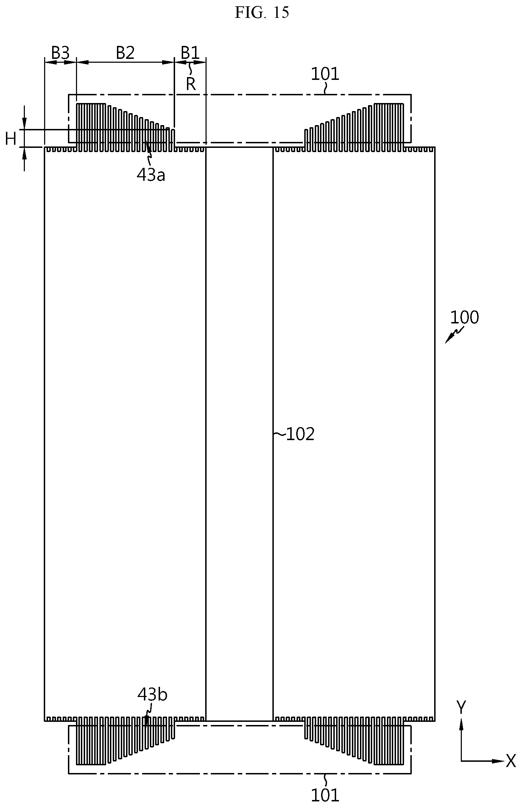

FIG. 15 is a cross-sectional view of the electrode assembly according to an embodiment of the present disclosure, taken along the Y axis direction (winding axis direction).

Referring to FIG. 15, the uncoated portion 43a of the electrode plate includes the core-side uncoated portion B1 adjacent to the core of the electrode assembly 100, the outer circumference-side uncoated portion B3 adjacent to the outer circumferential surface of the electrode assembly 100, and the intermediate uncoated portion B2 between the core-side uncoated portion B1 and the outer circumference-side uncoated portion B3.

The height of the core-side uncoated portion B1 is smaller than the height of the intermediate uncoated portion B2. Additionally, in the intermediate uncoated portion B2, the bend length of the innermost uncoated portion 43a is equal to or smaller than the length R of the core-side uncoated portion B1 in the radial direction. The bend length H corresponds to the height of the uncoated portion 43a on the basis of the point (h in FIG. 12, h in FIG. 14) at which the uncoated portion 43a bends.

Accordingly, when the intermediate uncoated portion B2 bends, the bent part does not close the cavity 102 at the core of the electrode assembly 100. When the cavity 102 is not closed, there is no difficulty in the electrolyte injection process, and the electrolyte solution injection efficiency improves. Additionally, it may be possible to easily perform the welding process between the current collector plate of the negative electrode (or the positive electrode) and the battery can (or the rivet terminal) by inserting a welding jig through the cavity 102.

The height of the outer circumference-side uncoated portion B3 is smaller than the height of the intermediate uncoated portion B2. Accordingly, it may be possible to prevent the contact between the beading portion and the outer circumference-side uncoated portion B3 during the beading of the beading portion of the battery can near the outer circumference-side uncoated portion B3.

In a variation, unlike FIG. 15, the height of the outer circumference-side uncoated portion B3 may decrease gradually or stepwise. Additionally, in FIG. 15, the height of the intermediate uncoated portion B2 in part of the outer circumference is equal, but the height of the intermediate uncoated portion B2 may increase gradually or stepwise from the boundary of the core-side uncoated portion B1 and the intermediate uncoated portion B2 to the boundary of the intermediate uncoated portion B2 and the outer circumference-side uncoated portion B3.

The lower uncoated portion 43b has the same structure as the upper uncoated portion 43a. In a variation, the lower uncoated portion 43b may have the conventional electrode plate structure or the electrode plate structure of other embodiments (variations).

An end portion 101 of the upper uncoated portion 43a and the lower uncoated portion 43b may be bent from the outer circumference of the electrode assembly 100 to the core. In this instance, the core-side uncoated portion B1 and the outer circumference-side uncoated portion B3 are not substantially bent.

When the intermediate uncoated portion B2 includes the plurality of segments, it may be possible to mitigate bending stress, thereby preventing tearing or abnormal deformation in the uncoated portion 43a near the bending point. Additionally, when the width and/or height and/or pitch of the segments is adjusted according to the numerical range of the above-described embodiment, the segments overlap in multilayers enough to ensure the weld strength when the segments bend toward the core and do not form an empty hole (a gap) in the bent surface (surface viewed from the Y axis).

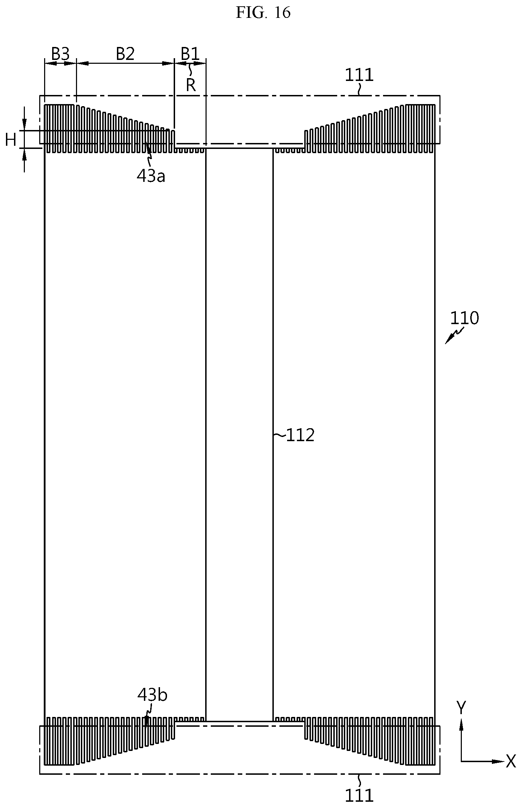

FIG. 16 is a cross-sectional view of the electrode assembly according to another embodiment of the present disclosure, taken along the Y axis direction (winding axis direction).

Referring to FIG. 16, the electrode assembly 110 is substantially the same as the electrode assembly 100 of FIG. 15 except that the height of the outer circumference-side uncoated portion B3 is substantially equal to the outermost height of the intermediate uncoated portion B2. The outer circumference-side uncoated portion B3 may include the plurality of segments.

In the electrode assembly 110, the height of the core-side uncoated portion B1 is smaller than the height of the intermediate uncoated portion B2. Additionally, in the intermediate uncoated portion B2, the bend length H of the innermost uncoated portion is equal to or smaller than the length R of the core-side uncoated portion B1 in the radial direction.

Accordingly, when the intermediate uncoated portion B2 bends, the bent part does not close the cavity 112 at the core of the electrode assembly 110. When the cavity 112 is not closed, there is no difficulty in the electrolyte injection process, and the electrolyte solution injection efficiency improves. Additionally, it may be possible to easily perform the welding process between the current collector plate of the negative electrode (or the positive electrode) and the battery can (or the rivet terminal) by inserting the welding jig through the cavity 112.

In a variation, the structure in which the height of the intermediate uncoated portion B2 increases gradually or stepwise from the core to the outer circumference may be extended to the outer circumference-side uncoated portion B3. In this case, the height of the uncoated portion 43a may increase gradually or stepwise from the boundary of the core-side uncoated portion B1 and the intermediate uncoated portion B2 to the outermost surface of the electrode assembly 110.

The lower uncoated portion 43b has the same structure as the upper uncoated portion 43a. In a variation, the lower uncoated portion 43b may have the conventional electrode plate structure or the electrode plate structure of other embodiments (variations).

An end portion 111 of the upper uncoated portion 43a and the lower uncoated portion 43b may be bent from the outer circumference to the core of the electrode assembly 110. In this instance, the core-side uncoated portion B1 is not substantially bent.

When the intermediate uncoated portion B2 and the outer circumference-side uncoated portion B3 include the plurality of segments, it may be possible to mitigate bending stress, thereby preventing tearing or abnormal deformation in the uncoated portions 43a, 43b near the bending point. Additionally, when the width and/or height and/or pitch of the segments is adjusted according to the numerical range of the above-described embodiment, the segments overlap in multilayers enough to ensure the weld strength when the segments bend toward the core and do not form an empty hole (a gap) in the bent surface (surface viewed from the Y axis).

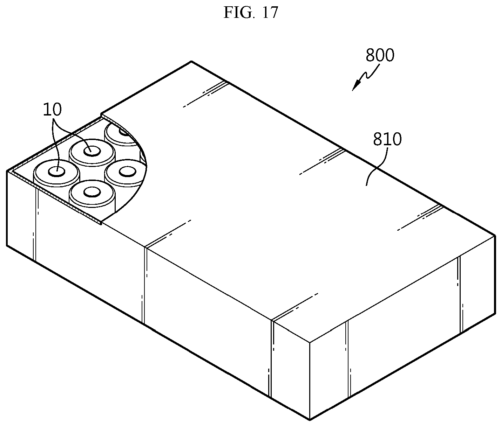

FIG. 17 is a diagram schematically showing a battery pack according to an embodiment of the present disclosure.

Referring to FIG. 17, the battery pack 800 according to an embodiment of the present disclosure includes a set of cylindrical battery cells 10 electrically connected to each other and a pack housing 810 accommodating the set of cylindrical battery cells 10. The cylindrical battery cell 10 is the battery cell according to the above-described embodiment. In the drawings, for convenience of illustration, the illustration of components such as a busbar for electrical connection of the cylindrical battery cells 10, a cooling unit and an external terminal is omitted.

The battery pack 800 may be mounted in a vehicle 900. The vehicle 900 may be, for example, an electric vehicle, a hybrid electric vehicle or a plugin hybrid electric vehicle. The vehicle 900 includes a four-wheeled vehicle or a two-wheeled vehicle.

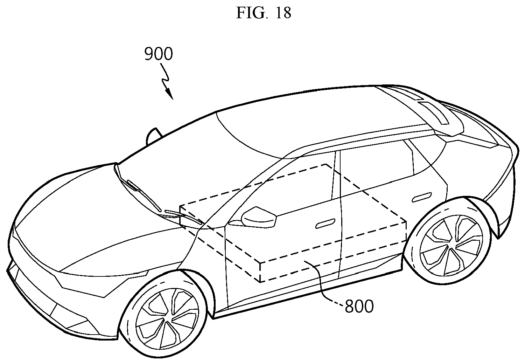

FIG. 18 is a diagram illustrating the vehicle including the battery pack of FIG. 17.

Referring to FIG. 18, the vehicle 900 according to an embodiment of the present disclosure includes the battery pack 800 according to an embodiment of the present disclosure. The vehicle 900 operates by the power supplied from the battery pack 800 according to an embodiment of the present disclosure.

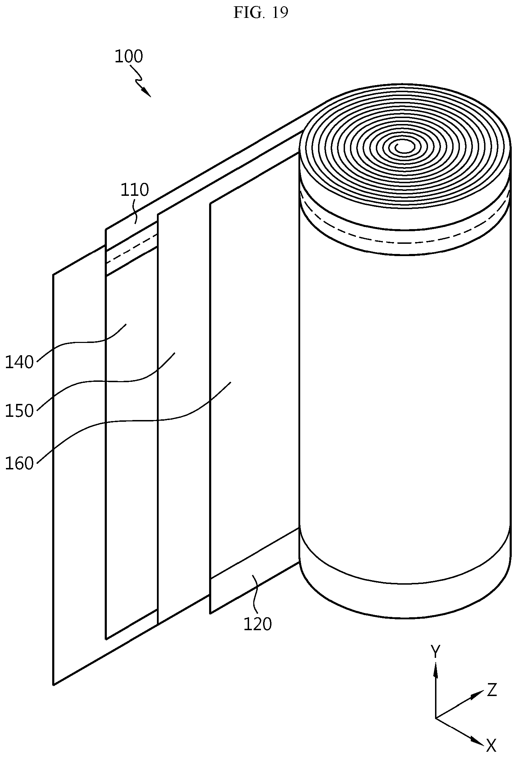

FIGS. 19 to 25 are diagrams showing the process steps of a method for manufacturing a cylindrical battery cell according to an embodiment of the present disclosure.

The method for manufacturing the cylindrical battery cell according to an embodiment of the present disclosure will be described. In this instance, the description in common with the cylindrical battery cell according to the previous embodiment of the present disclosure is replaced by the foregoing description.

First, referring to FIG. 19, the electrode assembly 100 is prepared. The electrode assembly 100 is a jellyroll-type having a structure in which the first electrode plate 140 and the second electrode plate 160, each having a sheet shape and the separator 150 interposed between them are wound in a direction. The first electrode plate 140 includes the first uncoated portion 110 that is not coated with the active material layer at the end portion on the long side, and the first uncoated portion 110 and the second uncoated portion 120 form a plurality of winding turns on the basis of the center of the electrode assembly 100 and are exposed to the outside of the separator and used as an electrode tab itself.

Subsequently, the current collector plate 300 is coupled to the first uncoated portion 110 of the electrode assembly 100.

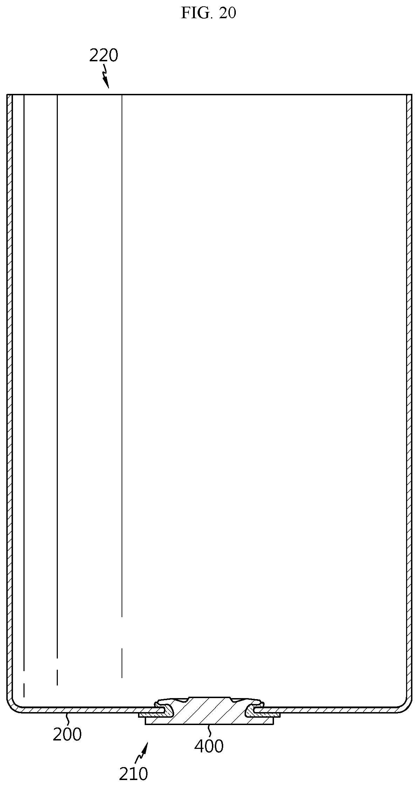

Subsequently, referring to FIG. 20, the battery can 200 is prepared, the battery can 200 having the open portion 220 in which the electrode assembly 100 is received and the partially closed portion 210 opposite the open portion 220 and electrically connected to the second electrode plate 160.

Subsequently, the cell terminal 400 is coupled to the battery can 200 by the riveting process through the through-hole 211 of the closed portion 210 of the battery can 200.

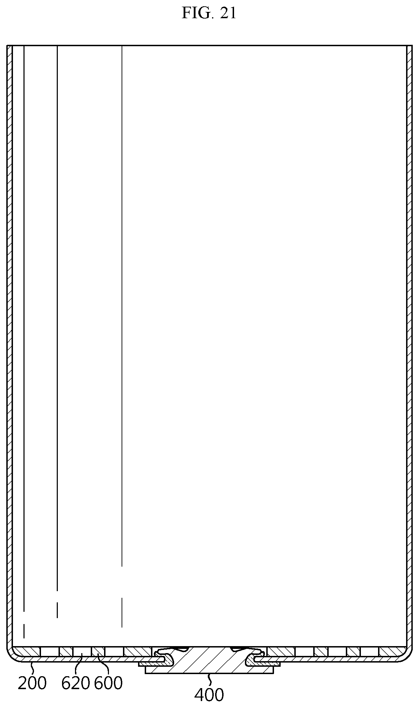

Subsequently, referring to FIG. 21, the insulator 600 is coupled to the inner surface of the closed portion 210 of the battery can 200 with the battery can 200 placed such that the cell terminal 400 is at the bottom. In an aspect, at least one protruding portion 610 may be formed in the outer circumferential surface of the insulator 600, and the insulator 600 may be coupled to the battery can 200 by interference fit. Preferably, the protruding portion 610 may include a plurality of protruding portions 610, and the plurality of protruding portions 610 may be arranged at the preset interval on the outer circumferential surface of the insulator 600, and compressed through the interference fit. In another aspect, the hot melt layer may be formed on the surface of the insulator 600 facing the inner surface of the closed portion 210 of the battery can 200, and the insulator 600 may be fixed to the battery can 200 by heat fusion. In another aspect, the adhesive layer is formed on the upper surface of the insulator 600 that contacts the battery can 200, and the insulator 600 may be fixed to the battery can 200 by adhesion. In another aspect, the insulator 600 may be fixed to the battery can 200 by the double sided tape.

Preferably, the electrolyte solution may be injected into the battery can 200 standing erect such that the cell terminal 400 faces in the gravity direction. The upper surface of the insulator 600 connected from the outer circumferential surface of the insulator 600 may have at least one through-hole 620, and the electrolyte solution may move into the electrode assembly 100 through the through-hole 620. Preferably, the through-hole 620 may include a plurality of through-holes 620, and the plurality of through-holes 620 may be arranged spaced the preset distance apart from each other. Preferably, the plurality of through-holes 620 may be disposed on a straight line facing from the central portion to the outer circumferential surface of the insulator 600. Preferably, for each of a plurality of straight lines arranged radially from the central portion to the outer circumferential surface of the insulator 600, the plurality of through-holes 620 may be disposed.

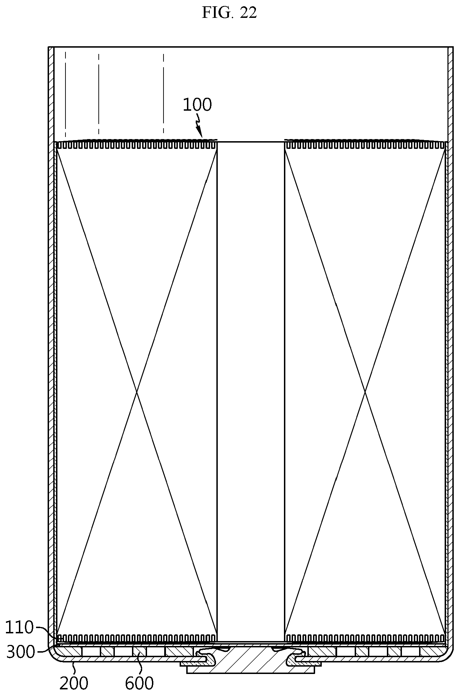

Subsequently, referring to FIG. 22, the electrode assembly 100 is inserted into the battery can 200, and the insulator 600 is interposed between the battery can 200 and the current collector plate 300.

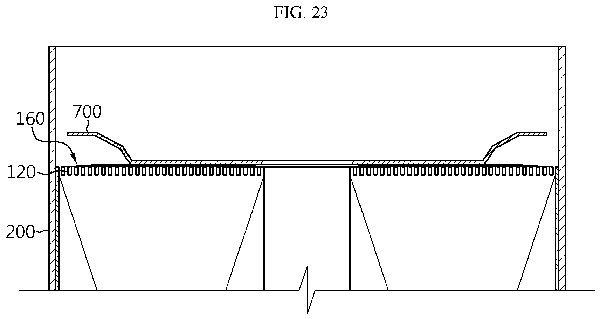

Subsequently, referring to FIG. 23, the lower current collector plate 700 is coupled to the second uncoated portion 120 of the second electrode plate 160 via welding. According to the design of the process, the welding of the lower current collector plate 700 may be performed before the electrode assembly 100 is inserted into the battery can 200. The detailed description of the second electrode plate 160 and the lower current collector plate 700 is replaced by the foregoing description.

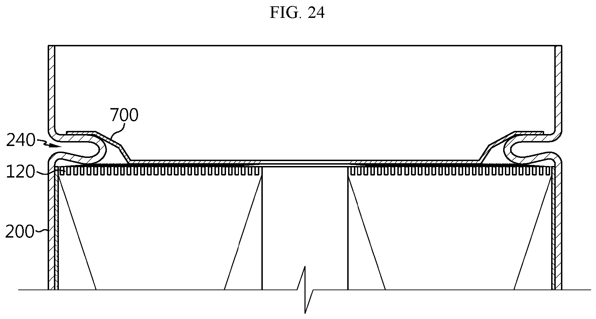

Subsequently, referring to FIG. 24, the beading portion 240 is formed in the battery can 200. Welding is performed with the edge of the lower current collector plate 700 seated on the flat surface of the crimping portion 250 adjacent to the beading portion 240. The detailed description of the beading portion 240 is replaced by the foregoing description.

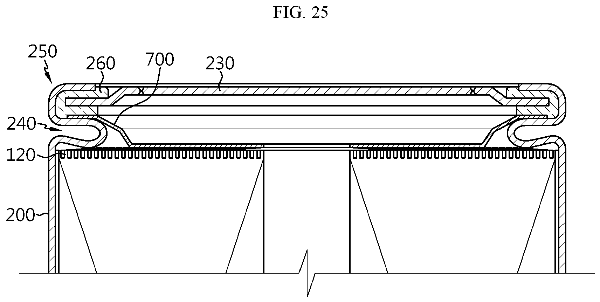

Subsequently, referring to FIG. 25, the crimping portion 250 is formed in the battery can 200. When the crimping portion 250 is formed, the edge of the cap plate 230 is supported on the beading portion 240 by the medium of the sealing gasket 260, and as the upper end of the battery can 200 is bent inward, the crimping portion 250 compresses the sealing gasket 260 to fix the cap plate 230. The detailed description of the crimping portion 250 is replaced by the foregoing description.

According to the above-described manufacturing method, since the insulator is fixed to the battery can so as not to move, when the jellyroll-type electrode assembly is inserted into the battery can afterward, the insulator may be coupled to the jellyroll-type electrode assembly at the correct location, and accordingly it may be possible to improve insulation and prevent faults or failures.

## Claims

1. A battery cell (10), comprising:
an electrode assembly (100) including a first electrode plate (140) and a second electrode plate (160) wound in a direction with a separator (150) interposed between the first electrode plate (140) and the second electrode plate (160);
a battery can (200) having an open portion on a side to accommodate the electrode assembly (100) and a partially closed portion on an opposite side, and electrically connected to the second electrode plate (160);
a current collector plate (300) electrically connected to the first electrode plate (140);
a cell terminal (400) connected to the current collector plate (300) through a through-hole (211) of the closed portion of the battery can (200); and
an insulator (600) having a center hole through which a bottom of the cell terminal (400) is exposed, and interposed between the battery can (200) and the current collector plate (300),
wherein the insulator (600) includes a protruding portion (610) on an outer circumferential surface of the insulator (600) to push an inner surface of the battery can (200) when the electrode assembly (100) is received in the battery can (200),
wherein the insulator (600) includes a protrusion accommodation portion (630) for natural compression of the protruding portion (610) in the inward direction of the insulator (600) when inserted into the battery can (200), wherein the protrusion accommodation portion (630) is an empty space formed in a portion of the insulator (600) by a slit.

2. The battery cell (10) according to claim 1, wherein the protruding portion (610) includes a plurality of protruding portions (610), and
wherein the plurality of protruding portions (610) is arranged at a preset interval on the outer circumferential surface of the insulator (600).

3. The battery cell (10) according to claim 1, wherein the insulator (600) has an adhesive layer on an upper surface of the insulator (600) that contacts the battery can (200) so that the insulator (600) is fixed to the battery can (200) by adhesion when the electrode assembly (100) is received in the battery can (200).

4. The battery cell (10) according to claim 1, wherein the insulator (600) has a through-hole (620) in an area between the outer circumferential surface and the center hole.

5. The battery cell (10) according to claim 1, wherein a distance from a center of the insulator (600) to an end of the protruding portion (610) is greater than a radius of the electrode assembly (100).

6. The battery cell (10) according to claim 1, wherein a distance from a center of the insulator (600) to an area in which the protruding portion (610) is not formed in the outer circumferential surface of the insulator (600) is equal to or greater than a radius of the electrode assembly (100).

7. The battery cell (10) according to claim 1, wherein a distance from a center of the insulator (600) to an end of the protruding portion (610) is greater than an inner diameter of the battery can (200).

8. The battery cell (10) according to claim 7, wherein the protruding portion (610) is elastically compressed in an inward direction of the insulator (600) by the inner surface of the battery can (200).

9. The battery cell (10) according to claim 1, wherein the protrusion accommodation portion (630) is spaced apart in a direction toward a center of the insulator (600) at a location corresponding to the protruding portion (610).

10. The battery cell (10) according to claim 9, wherein an outer portion of the protrusion accommodation portion (630) has a convex shape in a direction toward the protruding portion (610).

11. The battery cell (10) according to claim 9, wherein the protrusion accommodation portion (630) has a length corresponding to a distance from an end to an opposite end of the protruding portion (610) in a circumferential direction of the insulator (600).

12. The battery cell (10) according to claim 10, wherein a curvature radius of the outer portion of the protrusion accommodation portion (630) is smaller than a curvature radius of the protruding portion (610).

13. A battery pack comprising at least one battery cell (10) according to any one of claims 1 to 12.

14. A vehicle comprising at least one battery pack according to claim 13.

## Patentansprüche

1. Batteriezelle (10) aufweisend:
eine Elektrodenanordnung (100) mit einer ersten Elektrodenplatte (140) und einer zweiten Elektrodenplatte (160), die in einer Richtung gewickelt sind, wobei ein Separator (150) zwischen der ersten Elektrodenplatte (140) und der zweiten Elektrodenplatte (160) angeordnet ist;
eine Batteriedose (200) mit einem offenen Abschnitt auf einer Seite, um die Elektrodenanordnung (100) aufzunehmen, und einem teilweise geschlossenen Abschnitt auf einer gegenüberliegenden Seite, und die elektrisch mit der zweiten Elektrodenplatte (160) verbunden ist;
eine Stromkollektorplatte (300), die elektrisch mit der ersten Elektrodenplatte (140) verbunden ist;
einen Zellenanschluss (400), der durch ein Durchgangsloch (211) des geschlossenen Abschnitts der Batteriedose (200) hindurch mit der Stromkollektorplatte (300) verbunden ist; und
einen Isolator (600) der ein Mittelloch aufweist, durch das ein Boden des Zellenanschlusses (400) freiliegt, und zwischen der Batteriedose (200) und der Stromkollektorplatte (300) angeordnet ist,
wobei der Isolator (600) einen vorstehenden Abschnitt (610) auf einer Außenumfangsfläche des Isolators (600) aufweist, um gegen eine Innenfläche der Batteriedose (200) zu drücken, wenn die Elektrodenanordnung (100) in der Batteriedose (200) aufgenommen ist,
wobei der Isolator (600) einen Vorsprungsaufnahmeabschnitt (630) für eine natürliche Kompression des vorstehenden Abschnitts (610) in der Einwärtsrichtung des Isolators (600) aufweist, wenn er in die Batteriedose (200) eingesetzt ist, wobei der Vorsprungsaufnahmeabschnitt (630) ein leerer Raum ist, der durch einen Schlitz in einem Abschnitt des Isolators (600) ausgebildet ist.

2. Batteriezelle (10) nach Anspruch 1, wobei der vorstehende Abschnitt (610) mehrere vorstehende Abschnitte (610) aufweist, und
wobei die mehreren vorstehenden Abschnitte (610) in einem voreingestellten Intervall auf der Außenumfangsfläche des Isolators (600) angeordnet sind.

3. Batteriezelle (10) nach Anspruch 1, wobei der Isolator (600) eine Klebeschicht auf einer oberen Fläche des Isolators (600) aufweist, die in Kontakt mit der Batteriedose (200) steht, so dass der Isolator (600) durch Kleben an der Batteriedose (200) befestigt wird, wenn die Elektrodenanordnung (100) in der Batteriedose (200) aufgenommen ist.

4. Batteriezelle (10) nach Anspruch 1, wobei der Isolator (600) ein Durchgangsloch (620) in einem Bereich zwischen der Außenumfangsfläche und dem Mittelloch aufweist.

5. Batteriezelle (10) nach Anspruch 1, wobei ein Abstand von einer Mitte des Isolators (600) zu einem Ende des vorstehenden Abschnitts (610) größer als ein Radius der Elektrodenanordnung (100) ist.

6. Batteriezelle (10) nach Anspruch 1, wobei ein Abstand von einer Mitte des Isolators (600) zu einem Bereich, in dem der vorstehende Abschnitt (610) nicht in der Außenumfangsfläche des Isolators (600) ausgebildet ist, gleich oder größer als ein Radius der Elektrodenanordnung (100) ist.

7. Batteriezelle (10) nach Anspruch 1, wobei ein Abstand von einer Mitte des Isolators (600) zu einem Ende des vorstehenden Abschnitts (610) größer als ein Innendurchmesser des Batteriegehäuses (200) ist.

8. Batteriezelle (10) nach Anspruch 7, wobei der vorstehende Abschnitt (610) durch die Innenfläche der Batteriedose (200) in einer Einwärtsrichtung des Isolators (600) elastisch komprimiert wird.

9. Batteriezelle (10) nach Anspruch 1, wobei der Vorsprungsaufnahmeabschnitt (630) in einer Richtung zu einer Mitte des Isolators (600) an einer Stelle beabstandet ist, die dem vorstehenden Abschnitt (610) entspricht.

10. Batteriezelle (10) nach Anspruch 9, wobei ein äußerer Abschnitt des Vorsprungsaufnahmeabschnitts (630) in einer Richtung zu dem vorstehenden Abschnitt (610) eine konvexe Form aufweist.

11. Batteriezelle (10) nach Anspruch 9, wobei der Vorsprungsaufnahmeabschnitt (630) eine Länge aufweist, die einem Abstand von einem Ende zu einem gegenüberliegenden Ende des vorstehenden Abschnitts (610) in einer Umfangsrichtung des Isolators (600) entspricht.

12. Batteriezelle (10) nach Anspruch 10, wobei ein Krümmungsradius des äußeren Abschnitts des Vorsprungsaufnahmeabschnitts (630) kleiner als ein Krümmungsradius des vorstehenden Abschnitts (610) ist.

13. Batteriepack aufweisend mindestens eine Batteriezelle (10) nach einem der Ansprüche 1 bis 12.

14. Fahrzeug aufweisend mindestens ein Batteriepack nach Anspruch 13.

## Revendications

1. Élément de batterie (10), comportant :
un ensemble d'électrodes (100) comprenant une première électrode en plaque (140) et une deuxième électrode en plaque (160) enroulées dans une direction avec un séparateur (150) situé entre la première électrode en plaque (140) et la deuxième électrode en plaque (160) ;
un boîtier de batterie (200) ayant une partie ouverte sur un côté permettant de recevoir l'ensemble d'électrodes (100) et une partie partiellement fermée sur un côté opposé, et connecté électriquement à la deuxième électrode en plaque (160) ;
une plaque collectrice de courant (300) connectée électriquement à la première électrode en plaque (140) ;
une borne d'élément (400) connectée à la plaque collectrice de courant (300) par un trou traversant (211) de la partie fermée du boîtier de batterie (200) ; et
un isolant (600) ayant un trou central au travers duquel un fond de la borne d'élément (400) est exposé, et situé entre le boîtier de batterie (200) et la plaque collectrice de courant (300),
dans lequel l'isolant (600) comprend une partie faisant saillie (610) sur une surface circonférentielle extérieure de l'isolant (600) pour pousser une surface intérieure du boîtier de batterie (200) quand l'ensemble d'électrodes (100) est reçu dans le boîtier de batterie (200),
dans lequel l'isolant (600) comprend une partie de réception pour partie faisant saillie (630) à des fins de compression naturelle de la partie faisant saillie (610) dans la direction allant vers l'intérieur de l'isolant (600) lors de son insertion dans le boîtier de batterie (200), dans lequel la partie de réception pour partie faisant saillie (630) est un espace vide formé dans une partie de l'isolant (600) par une fente.

2. Élément de batterie (10) selon la revendication 1, dans lequel la partie faisant saillie (610) comprend une pluralité de parties faisant saillie (610), et
dans lequel la pluralité de parties faisant saillie (610) est agencée selon un intervalle préétabli sur la surface circonférentielle extérieure de l'isolant (600).

3. Élément de batterie (10) selon la revendication 1, dans lequel l'isolant (600) a une couche adhésive sur une surface supérieure de l'isolant (600) qui est en contact avec le boîtier de batterie (200) de telle sorte que l'isolant (600) est fixé au boîtier de batterie (200) par adhérence quand l'ensemble d'électrodes (100) est reçu dans le boîtier de batterie (200).

4. Élément de batterie (10) selon la revendication 1, dans lequel l'isolant (600) a un trou traversant (620) dans une zone se trouvant entre la surface circonférentielle extérieure et le trou central.

5. Élément de batterie (10) selon la revendication 1, dans lequel une distance allant d'un centre de l'isolant (600) à une extrémité de la partie faisant saillie (610) est supérieure à un rayon de l'ensemble d'électrodes (100).

6. Élément de batterie (10) selon la revendication 1, dans lequel une distance allant d'un centre de l'isolant (600) à une zone dans laquelle la partie faisant saillie (610) n'est pas formée dans la surface circonférentielle extérieure de l'isolant (600) est égale ou supérieure à un rayon de l'ensemble d'électrodes (100).

7. Élément de batterie (10) selon la revendication 1, dans lequel une distance allant d'un centre de l'isolant (600) à une extrémité de la partie faisant saillie (610) est supérieure à un diamètre intérieur du boîtier de batterie (200).

8. Élément de batterie (10) selon la revendication 7, dans lequel la partie faisant saillie (610) est comprimée de manière élastique dans une direction allant vers l'intérieur de l'isolant (600) par la surface intérieure du boîtier de batterie (200).

9. Élément de batterie (10) selon la revendication 1, dans lequel la partie de réception pour partie faisant saillie (630) est espacée dans une direction allant vers un centre de l'isolant (600) au niveau d'un emplacement correspondant à la partie faisant saillie (610).

10. Élément de batterie (10) selon la revendication 9, dans lequel une partie extérieure de la partie de réception pour partie faisant saillie (630) a une forme convexe dans une direction allant vers la partie faisant saillie (610).

11. Élément de batterie (10) selon la revendication 9, dans lequel la partie de réception pour partie faisant saillie (630) a une longueur correspondant à une distance allant d'une extrémité à une extrémité opposée de la partie faisant saillie (610) dans une direction circonférentielle de l'isolant (600).

12. Élément de batterie (10) selon la revendication 10, dans lequel un rayon de courbure de la partie extérieure de la partie de réception pour partie faisant saillie (630) est plus petit qu'un rayon de courbure de la partie faisant saillie (610).

13. Bloc de batterie, comportant au moins un élément de batterie (10) selon l'une quelconque des revendications 1 à 12.

14. Véhicule comportant au moins un bloc de batterie selon la revendication 13.
